# EUROPEAN PATENT APPLICATION

(11) **EP 4 852 036 A1**
(43) Date of publication of application: **09.12.2026**
(21) Application number: 24923598.7
(22) Date of filing: 31.12.2024
(51) Int. Cl.: H01F 38/32

(54) **CURRENT TRANSFORMER, PHOTOVOLTAIC INVERTER AND PHOTOVOLTAIC SYSTEM**

(30) Priority: 07.02.2024 CN 202410176989; 07.06.2024 CN 202410743807
(71) Applicant: Huawei Digital Power Technologies Co., Ltd., Shenzhen, Guangdong 518043 (CN)
(72) Inventor: LIU, Qiang, Shenzhen, Guangdong 518043 (CN); ZHANG, Jiangteng, Shenzhen, Guangdong 518043 (CN); YANG, Daoshu, Shenzhen, Guangdong 518043 (CN); QIN, Zhendong, Shenzhen, Guangdong 518043 (CN); TANG, Shun, Shenzhen, Guangdong 518043 (CN); SONG, Zhengang, Shenzhen, Guangdong 518043 (CN); FU, Mingxiao, Shenzhen, Guangdong 518043 (CN)
(74) Representative: Huawei European IPR
(86) International application number: PCT/CN2024/144413
(87) International publication number: WO 2025/167396

(57) **Abstract**

Embodiments of this application provide a current transformer, a photovoltaic inverter including the current transformer, and a photovoltaic system including the photovoltaic inverter, and relate to the field of current transformer technologies. The photovoltaic inverter includes a circuit board and a current transformer. A first circuit for direct current arcing detection and a second circuit for power line carrier communication are disposed on the circuit board. The current transformer includes a magnetic core and a winding wound on the magnetic core. The winding includes a first primary-side winding, a first secondary-side winding, and a second secondary-side winding. The first primary-side winding is configured to electrically connect to at least one photovoltaic string, and the first secondary-side winding and the second secondary-side winding are electrically connected to the first circuit and the second circuit respectively. At least two functions can be implemented via one magnetic core, to effectively complete arcing detection and communication control on the photovoltaic string. This reduces a volume of the current transformer, and reduces production and manufacturing costs.

## Description

This application claims priorities to Chinese Patent Application No. 202410176989.5, filed with the China National Intellectual Property Administration on February 7, 2024 and entitled "CURRENT TRANSFORMER, PHOTOVOLTAIC INVERTER, AND PHOTOVOLTAIC SYSTEM", and to Chinese Patent Application No. 202410743807.8, filed with the China National Intellectual Property Administration on June 7, 2024 and entitled "CURRENT TRANSFORMER, PHOTOVOLTAIC INVERTER, AND PHOTOVOLTAIC SYSTEM", both of which are incorporated herein by reference in their entireties.

### TECHNICAL FIELD

This application relates to the field of current transformer technologies, and in particular, to a current transformer, a photovoltaic inverter, and a photovoltaic system.

### BACKGROUND

In a photovoltaic system, direct current arcing is easily caused in a photovoltaic string due to reasons such as loose connectors, poor contact, damp wires, and insulation and breakage, and most electrical fires are caused by the direct current arcing. An arc-fault circuit interrupter (AFCI) technology for intelligent direct current arcing detection of the photovoltaic system can avoid fires caused by electric arcs. In addition, power control and monitoring of photovoltaic panels are a major trend in development of the photovoltaic system, to improve power generation efficiency, manageability, and safety. Most photovoltaic panels can be monitored only through direct current power cables, and there is no separate communication cables. Therefore, a power line carrier (Power Line Carrier, PLC) communication technology is widely applied to the photovoltaic system.

In a related technology, in direct current arcing detection and power line carrier communication of a photovoltaic inverter, input currents of a photovoltaic string are sampled via independent current transformers (Current Transformers, CTs) or magnetic rings respectively. However, the two independent current transformers occupy a large board area on a circuit board, and occupy a large volume inside the photovoltaic inverter.

### SUMMARY

This application provides a current transformer, a photovoltaic inverter including the current transformer, and a photovoltaic system including the photovoltaic inverter. At least two functions can be implemented via one magnetic core, to effectively complete arcing detection and communication control on a photovoltaic string. This reduces a volume of the current transformer, and reduces production and manufacturing costs.

To achieve the foregoing objective, the following technical solutions are used in this application.

According to a first aspect of this application, a photovoltaic inverter is provided, including: a circuit board, where a first circuit for direct current arcing detection and a second circuit for power line carrier communication are disposed on the circuit board; and a current transformer, where the current transformer is disposed on the circuit board. The current transformer includes a magnetic core and a winding wound on the magnetic core. The winding includes a first primary-side winding, a second primary-side winding, a first secondary-side winding, and a second secondary-side winding. The first primary-side winding is configured to electrically connect to a positive electrode of at least one photovoltaic string. The second primary-side winding is configured to electrically connect to a negative electrode of the at least one photovoltaic string. Each photovoltaic string includes at least one photovoltaic module. One of the first secondary-side winding and the second secondary-side winding is electrically connected to the first circuit, and the other of the first secondary-side winding and the second secondary-side winding is electrically connected to the second circuit.

When a current flows through the first primary-side winding and the second primary-side winding, currents may be induced on the first secondary-side winding and the second secondary-side winding via the magnetic core. In the current on the first secondary-side winding and the current on the second secondary-side winding, one current is fed back to the first circuit for direct current arcing detection, to perform analysis and determine, based on a spectrum feature, whether an electric arc is generated; and the other current is fed back to the second circuit for power line carrier communication, to communicate with an optimizer or the photovoltaic string, to implement control. At least two functions can be implemented via one magnetic core, to effectively complete arcing detection and communication control on the photovoltaic string. This reduces a board area occupied by the current transformer, saves internal space of the photovoltaic inverter, and reduces production and manufacturing costs.

In addition, the current transformer is usually disposed close to a cable port (including a positive port and a negative port) of the photovoltaic inverter. The first primary-side winding is electrically connected to the positive electrode (PV+) of the photovoltaic string, and the second primary-side winding is electrically connected to the negative electrode (PV-) of the photovoltaic string, so that direct current arcing detection can be preferentially performed on the current at the positive port and the negative port before the current is filtered or passes through another device. In this way, a direct current arcing detection result is more accurate.

In an optional implementation, the magnetic core is provided with a first winding hole. The first primary-side winding, the second primary-side winding, the first secondary-side winding, and the second secondary-side winding are all wound at the first winding hole. When the first primary-side winding and the second primary-side winding conduct a common-mode current, a direction of a magnetic flux generated by the second primary-side winding on the magnetic core is opposite to that of a magnetic flux generated by the first primary-side winding on the magnetic core.

A common-mode current is one of inherent features of a photovoltaic system. A high-frequency common-mode current not only increases a system loss and generates a grid-connected current harmonic, but also causes problems such as electromagnetic interference, and even threatens personal safety. To suppress the common-mode current, at least a part (a part or all) of the second primary-side winding is disposed at the first winding hole. When a current is loaded, and the first primary-side winding and the second primary-side winding conduct a differential-mode current, the second primary-side winding and the first primary-side winding generate magnetic fluxes with a same direction on the magnetic core respectively. In this way, when the common-mode current flows through the first primary-side winding and the second primary-side winding, magnetic fluxes with opposite directions are generated on the magnetic core respectively, so that the magnetic fluxes generated by the common-mode current on the magnetic core can be at least partially mutually offset, to suppress the common-mode current. This reduces a possibility that the common-mode current interferes with another device, and improves electromagnetic compatibility (Electro Magnetic Compatibility, EMC) of the system.

In an optional implementation, the magnetic core includes a first magnetic column, a second magnetic column, a third magnetic column, and a fourth magnetic column. The second magnetic column and the third magnetic column are disposed in an extension direction of the first magnetic column, the second magnetic column and the third magnetic column are located on a same side of the first magnetic column, the fourth magnetic column is located on a side that is of the second magnetic column and that is away from the first magnetic column, the fourth magnetic column extends from the second magnetic column to the third magnetic column, and the first magnetic column, the second magnetic column, the third magnetic column, and the fourth magnetic column enclose the first winding hole.

The first magnetic column, the second magnetic column, the third magnetic column, and the fourth magnetic column form the magnetic core ("square" type), and enclose the first winding hole, to facilitate winding of the winding on the magnetic core. In addition, a plurality of magnetic columns may be spliced, connected, and assembled based on a requirement, so that a plurality of different shapes and types of magnetic cores can be formed, to meet an assembly requirement of the photovoltaic inverter.

In an optional implementation, the magnetic core includes a first winding hole, a second winding hole, and a center column located between the first winding hole and the second winding hole. A first air gap is disposed at a position other than the center column in a part that is of the magnetic core and that encloses the first winding hole, and a second air gap is disposed at a position other than the center column in a part that is of the magnetic core and that encloses the second winding hole. The first primary-side winding and the first secondary-side winding are wound at the first winding hole, and the second secondary-side winding and at least a part of the second primary-side winding are wound at the second winding hole.

Both the first primary-side winding and the first secondary-side winding pass through the first winding hole. The first primary-side winding corresponds to the first secondary-side winding. When a current flows through the first primary-side winding, a current is induced on the first secondary-side winding via the magnetic core. The part that is of the second primary-side winding and that passes through the second winding hole corresponds to the second secondary-side winding. When a current flows through the second primary-side winding, a current is induced on the second secondary-side winding via the magnetic core. In addition, the first air gap and the second air gap are located on different sides of the center column respectively. A magnetic resistance of the part that is of the magnetic core and that is provided with the air gap (the first air gap or the second air gap) is relatively high. No air gap is disposed on the center column of the magnetic core, and a magnetic resistance is very low. Magnetic circuits (closed paths through which magnetic fluxes pass) on the two sides preferentially form closed loops at the center column. For example, after a current is loaded, the first primary-side winding forms the first magnetic circuit on the magnetic core, and the part that is of the second primary-side winding and that passes through the second winding hole forms the second magnetic circuit on the magnetic core. The first magnetic circuit and the second magnetic circuit preferentially form the closed loops at the center column, to implement mutual decoupling of the two magnetic circuits. This reduces a possibility that the two magnetic circuits affect each other and interfere with each other, so that two functions: direct current arcing detection and power line carrier communication can be independently implemented and independently controlled.

In an optional implementation, when the first primary-side winding and the second primary-side winding conduct a differential-mode current, a direction of a magnetic flux generated, on the center column, by the part that is of the second primary-side winding and that is wound at the second winding hole is opposite to that of a magnetic flux generated by the first primary-side winding on the center column.

When a current is loaded, and the first primary-side winding and the second primary-side winding conduct the differential-mode current, directions of magnetic fluxes of the first magnetic circuit and the second magnetic circuit at the center column are opposite, and the magnetic fluxes are mutually offset, so that impedance on the center column is relatively low (if the magnetic fluxes are superimposed, relatively high impedance is generated), and the first magnetic circuit and the second magnetic circuit preferentially form the closed loops at the center column, to facilitate mutual decoupling of the first magnetic circuit and the second magnetic circuit. This reduces a possibility that the first magnetic circuit and the second magnetic circuit affect each other and interfere with each other.

In an optional implementation, a part of the second primary-side winding is wound at the first winding hole, and the other part of the second primary-side winding is wound at the second winding hole. When the first primary-side winding and the second primary-side winding conduct a common-mode current, a direction of a magnetic flux generated, on the magnetic core, by the part that is of the second primary-side winding and that is wound at the first winding hole is opposite to that of a magnetic flux generated by the first primary-side winding on the magnetic core.

When a current is loaded, and the first primary-side winding and the second primary-side winding conduct the differential-mode current, the part that is of the second primary-side winding and that passes through the first winding hole and the first primary-side winding generate magnetic fluxes with a same direction on the magnetic core respectively. In this way, when the common-mode current flows through the first primary-side winding and the second primary-side winding, magnetic fluxes with opposite directions are generated on the magnetic core respectively, so that the magnetic fluxes generated by the common-mode current on the magnetic core can be at least partially mutually offset, to suppress the common-mode current. This reduces a possibility that the common-mode current interferes with another device, and improves electromagnetic compatibility of the system.

In an optional implementation, a third circuit is disposed on the circuit board, and the third circuit is configured to test the first circuit. The current transformer further includes a third secondary-side winding wound at the first winding hole. The first secondary-side winding is electrically connected to the first circuit. The third secondary-side winding is electrically connected to the third circuit.

The third circuit (for example, a self-check circuit) is disposed on the circuit board. When the current flows through the first primary-side winding, a current induced on the third secondary-side winding is fed back to the third circuit, to detect whether the first circuit (circuit for direct current arcing detection) normally runs, and accordingly determine whether arcing detection performed by the first circuit is accurate. If the third circuit detects that the first circuit normally runs, an accurate result can be obtained after the current induced on the first secondary-side winding is fed back to the first circuit for analysis.

In an optional implementation, the magnetic core further includes a first magnetic column, a second magnetic column, a third magnetic column, and a fourth magnetic column. The second magnetic column and the third magnetic column are disposed in an extension direction of the first magnetic column, the center column is located between the second magnetic column and the third magnetic column, the fourth magnetic column is located on a side that is of the center column and that is away from the first magnetic column, the fourth magnetic column extends from the second magnetic column to the third magnetic column, the first winding hole is located between the second magnetic column and the center column, and the second winding hole is located between the third magnetic column and the center column.

The first magnetic column, the second magnetic column, the third magnetic column, the fourth magnetic column, and the center column form the magnetic core ("θ" type), and form the first wire-winding hole and the second wire-winding hole, to facilitate winding of the winding on the magnetic core. In addition, a plurality of magnetic columns may be spliced, connected, and assembled based on a requirement, so that a plurality of different shapes and types of magnetic cores can be formed, to meet an assembly requirement of the photovoltaic inverter.

In an optional implementation, the second magnetic column, the third magnetic column, and the center column are all connected to a same side of the first magnetic column. The center column is in contact with the fourth magnetic column. The first air gap is formed between the second magnetic column and the fourth magnetic column. The second air gap is formed between the third magnetic column and the fourth magnetic column.

In the foregoing design manner, the magnetic core may be of an EI type. To be specific, the first magnetic column, the second magnetic column, the third magnetic column, and the center column form an E-type magnetic core, and the fourth magnetic column is an I-type magnetic core. Only air gaps need to be reserved between the second magnetic column and the fourth magnetic column and between the third magnetic column and the fourth magnetic column, to facilitate production and manufacturing of the magnetic core.

In an optional implementation, both the first primary-side winding and the second primary-side winding are wound on the fourth magnetic column. The fourth magnetic column is located on a side that is of the first magnetic column and that faces the circuit board.

Both the primary-side windings (the first primary-side winding and the second primary-side winding) and the secondary-side windings (the first secondary-side winding and the second secondary-side winding) are wound on a same magnetic column (the fourth magnetic column). In other words, the primary-side winding and the secondary-side winding are located on a same side of the magnetic core, and are disposed close to the circuit board, to facilitate a connection between the primary-side winding and the circuit board and a connection between the secondary-side winding and the circuit board.

In an optional implementation, the current transformer further includes a first insulation sleeve sleeved on the magnetic core. The first insulation sleeve passes through the first winding hole. The first secondary-side winding is wound outside the first insulation sleeve. The first primary-side winding is wound on a periphery of the first secondary-side winding. An insulation tape is disposed between the first primary-side winding and the first secondary-side winding. The current transformer further includes a second insulation sleeve sleeved on the magnetic core. The second insulation sleeve passes through the second winding hole. The second secondary-side winding is wound outside the second insulation sleeve. The part that is of the second primary-side winding and that passes through the second winding hole is wound on a periphery of the second secondary-side winding. An insulation tape is disposed between the second primary-side winding and the second secondary-side winding.

The secondary-side winding is wound at a corresponding position of the magnetic core. For example, the first secondary-side winding is wound outside the first insulation sleeve, and the second secondary-side winding is wound outside the second insulation sleeve. Then, the primary-side winding is wound on a periphery of the corresponding secondary-side winding. For example, the first primary-side winding is wound on the periphery of the first secondary-side winding, and the part that is of the second primary-side winding and that passes through the second winding hole is wound on the periphery of the second secondary-side winding. An insulation tape is disposed between the primary-side winding and the corresponding secondary-side winding. For example, after the secondary-side winding is wound, the insulation tape is first wrapped, and then the primary-side winding is wound, to insulate the primary-side winding from the secondary-side winding.

In an optional implementation, the current transformer further includes an insulation support. The insulation support is disposed on the circuit board. A support block is disposed on the insulation support, and the support block supports the magnetic core. There is a gap between the magnetic core and the insulation support. A plurality of through holes are disposed on the insulation support, two ends of the first primary-side winding and two ends of the second primary-side winding pass through corresponding through holes respectively, and are electrically connected to the circuit board.

The insulation support is disposed on the circuit board, and the support block is configured to support the magnetic core, so that there is the gap between the magnetic core and the insulation bracket, to facilitate winding of the winding. The plurality of through holes are disposed on the insulation support, and the two ends of the first primary-side winding and the two ends of the second primary-side winding pass through the corresponding through holes respectively, so that both end parts of the primary-side windings extend to the bottom of the insulation support, to facilitate the connection to the circuit board.

In an optional implementation, a plurality of photovoltaic strings are disposed. The first primary-side winding includes a plurality of first coils, the plurality of first coils are spaced apart, and each first coil is electrically connected to a positive electrode of one corresponding photovoltaic string. The second primary-side winding includes one second coil, a cross-sectional area of the second coil is greater than a cross-sectional area of a single first coil, and the second coil is configured to electrically connect to negative electrodes of the plurality of photovoltaic strings.

The photovoltaic system may include the plurality of photovoltaic strings. The photovoltaic string is used as an input source of the photovoltaic inverter. A positive electrode and a negative electrode of each photovoltaic string are electrically connected to the photovoltaic inverter, to input a current to the photovoltaic inverter. The first primary-side winding includes the plurality of first coils, and each first coil may be correspondingly electrically connected to a positive electrode of one photovoltaic string, to avoid short-circuiting of the plurality of photovoltaic strings. The current input to the photovoltaic inverter flows to the second coil of the second primary-side winding, and then returns to the negative electrode of the photovoltaic string to form a loop, so that a sum of currents flowing through the plurality of first coils is equal to the current flowing through the second coil. In addition, the design manner meets a cabling requirement of the circuit board of the photovoltaic inverter.

In an optional implementation, the plurality of first coils have a same quantity of turns, and a quantity of turns of any first coil is equal to a quantity of turns of the second coil wound at the first winding hole.

When the common-mode current flows through the first primary-side winding and the second primary-side winding, magnetic fluxes with opposite magnetic flux directions are generated on the magnetic core respectively. When the quantity of turns of the second coil at the first winding hole is equal to a quantity of turns of a single first coil, after the common-mode current flows through the first primary-side winding and the second primary-side winding, magnetic fluxes with an equal magnitude are generated on the magnetic core respectively, so that the magnetic fluxes generated by the common-mode current on the magnetic core are mutually offset. This reduces a possibility that the common-mode current interferes with another device.

In an optional implementation, a part that is of the second coil and that is wound at the first winding hole is disposed in the middle of the first winding hole, and at least one first coil is disposed on each of two sides of the part that is of the second coil and that is wound at the first winding hole. Distances between two first coils adjacent to the part that is of the second coil and that is wound at the first winding hole and the part that is of the second coil and that is wound at the first winding hole are equal.

The coil is designed close to the middle of the winding hole, so that magnetic leakage can be reduced. Because a current flowing through the second coil is relatively high, the part that is of the second coil and that is at the first winding hole may be disposed at the middle position of the first winding hole. In addition, to reduce magnetic leakage of the first coil, the plurality of first coils are disposed as close as possible to the middle of the first winding hole. In this case, the plurality of first coils may be distributed on the two sides of the part that is of the second coil winding and that is wound at the first winding hole, and are as close as possible to the second coil. However, there is a requirement on the distance between the first coil and the second coil. In this case, when a minimum spacing is met, the distances between the second coil and the first coils on the two sides are the same, or are symmetrically designed. In this way, a leakage inductance can be reduced, and impact on amplitude precision of the detection signal is reduced.

According to a second aspect of this application, a current transformer is provided. The current transformer includes a magnetic core and a winding wound on the magnetic core. The winding includes a first primary-side winding, a second primary-side winding, a first secondary-side winding, and a second secondary-side winding. The first primary-side winding is configured to electrically connect to a positive electrode of a power supply. The second primary-side winding is configured to electrically connect to a negative electrode of the power supply. The first secondary-side winding is configured to electrically connect to a circuit for direct current arcing detection. The second secondary-side winding is configured to electrically connect to a circuit for power line carrier communication.

A current induced on the first secondary-side winding and a current induced on the second secondary-side winding are fed back to the different circuits respectively. At least two functions can be implemented via one magnetic core. This reduces a volume of the current transformer and a board area occupied by the current transformer, and reduces production and manufacturing costs.

In an optional implementation, the magnetic core is provided with a first winding hole. The first primary-side winding, the second primary-side winding, the first secondary-side winding, and the second secondary-side winding are all wound at the first winding hole. When the first primary-side winding and the second primary-side winding conduct a common-mode current, a direction of a magnetic flux generated by the second primary-side winding on the magnetic core is opposite to that of a magnetic flux generated by the first primary-side winding on the magnetic core.

When the common-mode current flows through the first primary-side winding and the second primary-side winding, the magnetic fluxes with the opposite directions are generated on the magnetic core respectively, the magnetic fluxes generated by the common-mode current on the magnetic core are at least partially mutually offset, to suppress the common-mode current. This reduces a possibility that the common-mode current interferes with another device, and improves electromagnetic compatibility of a system.

In an optional implementation, the magnetic core includes a first winding hole, a second winding hole, and a center column located between the first winding hole and the second winding hole. A first air gap is disposed at a position other than the center column in a part that is of the magnetic core and that encloses the first winding hole, and a second air gap is disposed at a position other than the center column in a part that is of the magnetic core and that encloses the second winding hole. The first primary-side winding and the first secondary-side winding are wound at the first winding hole, and the second secondary-side winding and at least a part of the second primary-side winding are wound at the second winding hole.

Both the first primary-side winding and the first secondary-side winding pass through the first winding hole. The first primary-side winding corresponds to the first secondary-side winding. When a current flows through the first primary-side winding, a current is induced on the first secondary-side winding via the magnetic core. The part that is of the second primary-side winding and that passes through the second winding hole corresponds to the second secondary-side winding. When a current flows through the second primary-side winding, a current is induced on the second secondary-side winding via the magnetic core. In addition, the first air gap and the second air gap are located on two sides of the center column respectively. No air gap is disposed on the center column of the magnetic core, and a magnetic resistance is very low. Magnetic circuits on the two sides preferentially form closed loops at the center column, to implement decoupling of the two magnetic circuits. This reduces a possibility that the two magnetic circuits affect each other. At least two functions can be implemented via one magnetic core. This reduces a board area occupied by the current transformer, and saves internal space of the photovoltaic inverter.

In an optional implementation, when the first primary-side winding and the second primary-side winding conduct a differential-mode current, a direction of a magnetic flux generated, on the center column, by the part that is of the second primary-side winding and that is wound at the second winding hole is opposite to that of a magnetic flux generated by the first primary-side winding on the center column.

When a current is loaded, directions of magnetic fluxes of a first magnetic circuit and a second magnetic circuit at the center column are opposite, so that impedance on the center column is relatively low (if the magnetic fluxes are superimposed, relatively high impedance is generated), and the first magnetic circuit and the second magnetic circuit preferentially form closed loops at the center column, to facilitate decoupling of the two magnetic circuits. This reduces a possibility that the two magnetic circuits affect each other.

In an optional implementation, the magnetic core further includes a first magnetic column, a second magnetic column, a third magnetic column, and a fourth magnetic column. The second magnetic column and the third magnetic column are distributed in an extension direction of the first magnetic column. The center column is located between the second magnetic column and the third magnetic column. The fourth magnetic column is located on a side that is of the center column and that is away from the first magnetic column. The fourth magnetic column extends from the second magnetic column to the third magnetic column. The second magnetic column, the third magnetic column, and the center column are all connected to a same side of the first magnetic column. The center column is in contact with the fourth magnetic column. The first air gap is formed between the second magnetic column and the fourth magnetic column, and the second air gap is formed between the third magnetic column and the fourth magnetic column.

In the foregoing design manner, the magnetic core of the current transformer may be of an EI type. To be specific, the first magnetic column, the second magnetic column, the third magnetic column, and the center column form an E-type magnetic core, and the fourth magnetic column forms an I-type magnetic core. Only air gaps need to be disposed between the second magnetic column and the fourth magnetic column and between the third magnetic column and the fourth magnetic column, to facilitate production and manufacturing of the magnetic core.

In an optional implementation, the first primary-side winding includes a plurality of first coils, and the plurality of first coils are spaced apart. The second primary-side winding includes one second coil, and a cross-sectional area of the second coil is greater than a cross-sectional area of a single first coil. When a current is loaded, a sum of currents flowing through the plurality of first coils is equal to the current flowing through the second coil.

The current transformer may be electrically connected to a plurality of input sources. The first primary-side winding includes the plurality of first coils that are not connected to each other, and each first coil may be correspondingly electrically connected to one input source, to avoid short-circuiting of the plurality of input sources.

In an optional implementation, the plurality of first coils have a same quantity of turns, and a quantity of turns of a part that is of the second coil and that is wound at the first winding hole is equal to the quantity of turns of each first coil.

When the common-mode current flows through the first primary-side winding and the second primary-side winding, the magnetic fluxes with an equal magnitude and opposite directions are generated on the magnetic core respectively, so that the magnetic fluxes generated by the common-mode current on the magnetic core are mutually offset. This reduces a possibility that the common-mode current interferes with another device.

According to a third aspect of this application, a photovoltaic system is provided. The photovoltaic system includes at least one optimizer and the photovoltaic inverter. Each optimizer is configured to connect to the at least one photovoltaic module. The at least one optimizer is electrically connected to the second circuit of the photovoltaic inverter.

The photovoltaic string may be used as an input source of the photovoltaic inverter. A positive electrode and a negative electrode of each photovoltaic string are electrically connected to the photovoltaic inverter, to input a current to the photovoltaic inverter. Information transmission is performed between the photovoltaic inverter and the optimizer through power line carrier communication (PLC). In other words, the photovoltaic inverter and the optimizer are connected to each other through a power cable, and information transmission, including information exchange operations such as service query and command control, is performed through the second circuit (a circuit for power line carrier communication) and the power cable. In addition, the photovoltaic system provided in this application includes the photovoltaic inverter. Therefore, the photovoltaic system provided in this application and the photovoltaic inverter in the foregoing technical solution can resolve a same technical problem, and have same technical effect. Details are not described herein again.

### BRIEF DESCRIPTION OF DRAWINGS

FIG. 1 is a diagram of a partial structure of a photovoltaic system according to an embodiment of this application;
FIG. 2 is a diagram of a connection manner of an optimizer according to an embodiment of this application;
FIG. 3 is a diagram of another connection manner of an optimizer according to an embodiment of this application;
FIG. 4 is a diagram of a partial structure of a photovoltaic inverter according to an embodiment of this application;
FIG. 5 is a diagram of a partial structure of a current transformer according to an embodiment of this application;
FIG. 6 is a diagram of a spacing between a first coil and a second coil according to an embodiment of this application;
FIG. 7 is a diagram of a principle of a current transformer according to an embodiment of this application;
FIG. 8 is a diagram of current flow directions of a first coil and a second coil according to an embodiment of this application;
FIG. 9 is a diagram of magnetic circuit directions of a first coil and a second coil during normal current loading according to an embodiment of this application;
FIG. 10 is a diagram of current flow directions of a common-mode current on a first coil and a second coil according to an embodiment of this application;
FIG. 11 is a diagram of magnetic circuit directions in which a common-mode current flows through a first coil and a second coil according to an embodiment of this application;
FIG. 12 is a diagram of a partial structure of another photovoltaic inverter according to an embodiment of this application;
FIG. 13 is a diagram of structures of a plurality of magnetic cores according to an embodiment of this application;
FIG. 14 is a diagram of a first magnetic circuit and a second magnetic circuit according to an embodiment of this application;
FIG. 15 is a diagram of structures of a first primary-side winding and a second primary-side winding according to an embodiment of this application;
FIG. 16 is a diagram of structures of a first secondary-side winding, a second secondary-side winding, and a third secondary-side winding according to an embodiment of this application;
FIG. 17 is a diagram of a partial structure of another current transformer according to an embodiment of this application;
FIG. 18 is a diagram of structures of through holes of an insulation support according to an embodiment of this application;
FIG. 19 is a diagram of a principle of another current transformer according to an embodiment of this application; and
FIG. 20 is a diagram of a structure of a magnetic core of another current transformer according to an embodiment of this application.

Reference numerals:
100: photovoltaic system;
200: photovoltaic string; 201: photovoltaic module; 202: optimizer; 203: conducting wire; 204: power cable;
300: photovoltaic inverter; 301: circuit board; 302: current transformer;
1: magnetic core; 101: first winding hole; 102: second winding hole; 103: air gap; 1031: first air gap; 1032: second air gap; 1033: third air gap; 11: first magnetic column; 12: second magnetic column; 13: third magnetic column; 14: fourth magnetic column; 15: center column;
21: first primary-side winding; 211: first coil; 22: second primary-side winding; 220: second coil; 221: first part; 222: second part; 223: third part;
31: first secondary-side winding; 32: second secondary-side winding; 33: third secondary-side winding;
4: first insulation sleeve; 41: groove; 42: first insert pin;
5: second insulation sleeve; 51: second insert pin;
6: pin;
7: insulation tape;
8: insulation support; 81: support block; 82: through hole; 83: socket.

### DESCRIPTION OF EMBODIMENTS

The following describes technical solutions in embodiments of this application with reference to accompanying drawings in embodiments of this application. It is clear that the described embodiments are only a part rather than all of embodiments of this application.

In this application, the terms "first", "second", and the like are merely intended for a purpose of description, are intended to distinguish between one element and another element, and shall not be understood as an indication or implication of relative importance or implicit indication of a quantity of indicated technical features. Therefore, a characteristic limited by "first", "second", or the like may explicitly or implicitly include one or more characteristics. In addition, in this application, unless otherwise specified and limited, "a plurality of" means two or more.

In this application, it should be noted that the term "connection" or "connecting" should be understood in a broad sense unless otherwise specified and limited, for example, may be a fixed connection, may be a detachable connection, may be an integral connection, may be a direct connection, may be an indirect connection through an intermediate medium, or may be internal communication between two elements. A person of ordinary skill in the art may understand specific meanings of the foregoing terms in this application based on specific situations.

In this application, unless otherwise specified and limited, the term "coupling" should be understood in a broad sense. For example, "coupling" may be a direct electrical connection between two components, for example, two components are in physical contact and electrically connected to each other, and may also be understood that different components in a line structure are electrically connected to each other through a physical line that can transmit an electrical signal, such as a printed circuit board (printed circuit board, PCB) copper foil or a conducting wire, to transmit the electrical signal. Alternatively, "coupling" may be an indirect electrical connection between two components through an intermediate medium. Alternatively, "coupling" may be an electrical connection between two components in a space-free/non-contact manner. For example, the two components are electrically connected to each other in a capacitive coupling, inductive coupling, or resistive coupling manner, to transmit the electrical signal. In addition, in embodiments of this application, the term "decoupling" means that there is no direct or indirect electrical connection relationship between two components. Therefore, no electrical signal is transmitted between the two decoupled components.

In addition, in this application, the word such as "example" or "for example" indicates an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In the accompanying drawings in embodiments of this application, entity structures such as components and assemblies are represented by guide lines, and hollowed-out structures such as openings, holes, space, and cavities are represented by guide lines with arrows.

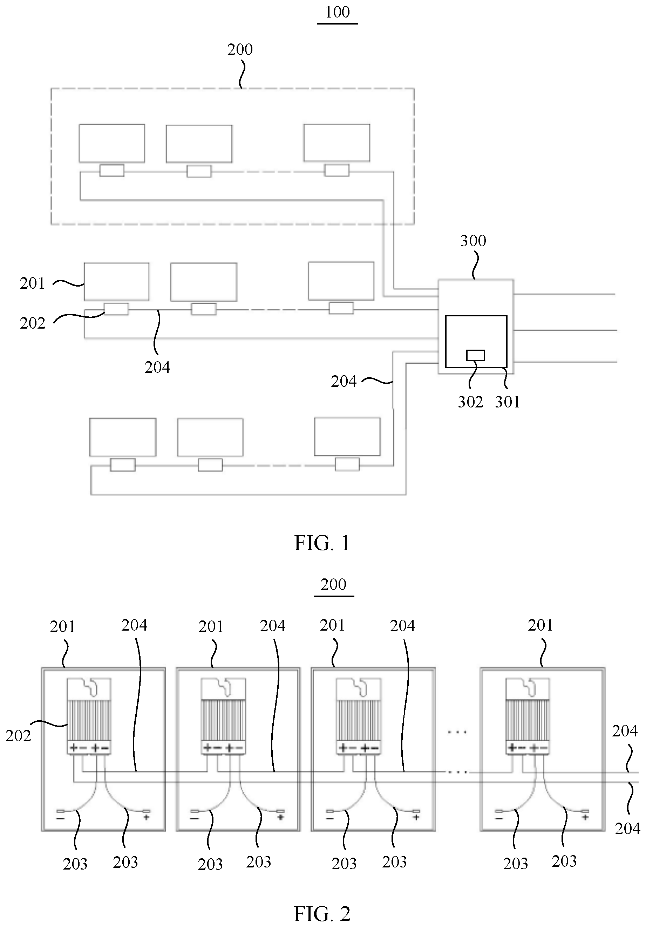

In a photovoltaic system 100, distributed power generation is one of main forms of photovoltaic power generation, and has a broad application prospect. FIG. 1 illustrates an architecture of the photovoltaic system 100. The photovoltaic system 100 may include at least one photovoltaic string 200 and a photovoltaic inverter 300. In the example shown in FIG. 1, the photovoltaic system 100 includes a plurality of photovoltaic strings 200. In another example, only one photovoltaic string 200 is disposed in the photovoltaic system 100.

With reference to FIG. 1, each photovoltaic string 200 includes a plurality of photovoltaic modules 201 (for example, photovoltaic panels), and the plurality of photovoltaic modules 201 in each photovoltaic string 200 are connected to each other in series. In some other examples, the plurality of photovoltaic modules 201 in each photovoltaic string 200 may be connected to each other in parallel. In some other examples, in each photovoltaic string 200, a part of the plurality of photovoltaic modules 201 may be connected to each other in series, and the other part of the photovoltaic modules may be connected to each other in parallel. The photovoltaic module 201 is configured to convert solar energy into electric energy (which is usually a direct current), and the photovoltaic module 201 is greatly affected by light radiation. For example, when the photovoltaic module 201 is shielded by an obstacle, an energy yield of the shielded photovoltaic module 201 is significantly reduced.

To improve power generation efficiency and enhance system reliability, the photovoltaic system 100 may further include at least one optimizer 202. FIG. 2 illustrates a connection manner of the optimizer 202. In this example, an optimizer 202 (photovoltaic power optimizer) is disposed on each photovoltaic module 201 in each photovoltaic string 200. A positive electrode on an input side of each optimizer 202 is connected to a negative electrode of a corresponding photovoltaic module 201 through a conducting wire 203, a negative electrode on the input side of each optimizer 202 is connected to a positive electrode of a corresponding photovoltaic module 201 through a conducting wire 203, and output sides of the plurality of optimizers 202 in each photovoltaic string 200 are connected to each other in series through power cables 204. In other words, the plurality of optimizers 202 correspondingly disposed on the plurality of photovoltaic modules 201 in each photovoltaic string 200 are connected to each other in series through the power cables 204, and are connected to the photovoltaic inverter 300 (with auxiliary reference to FIG. 1).

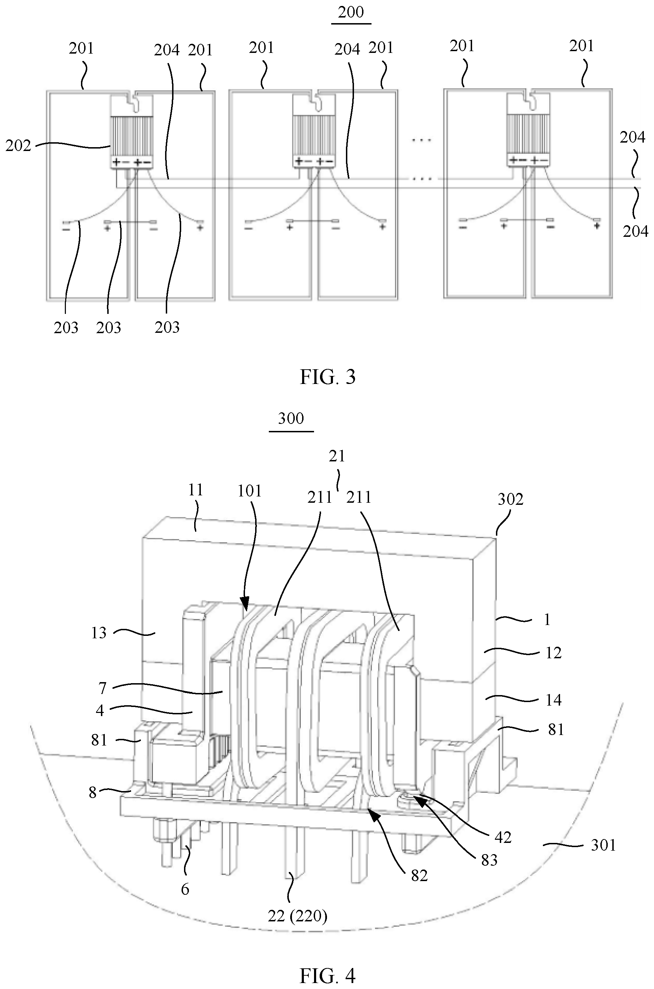

FIG. 3 illustrates another connection manner of the optimizer 202. In this example, the plurality of photovoltaic modules 201 in each photovoltaic string 200 may share one optimizer 202. For example, with reference to FIG. 3, in each photovoltaic string 200, two photovoltaic modules 201 are connected to one optimizer 202, a positive electrode on an input side of each optimizer 202 is connected to a negative electrode of one of the two corresponding photovoltaic modules 201 through a conducting wire 203, a negative electrode on the input side of each optimizer 202 is connected to a positive electrode of the other of the photovoltaic modules 201 through a conducting wire 203, positive and negative electrodes of the two photovoltaic modules 201 connected to the same optimizer 202 are connected to each other through a conducting wire 203, and output sides of the plurality of optimizers 202 in each photovoltaic string 200 are connected to each other in series through power cables 204.

It should be noted that the power cable 204 in this application may include a plurality of cables. Some cables are configured to connect two adjacent optimizers 202 or two adjacent photovoltaic modules 201, and some cables are configured to connect the optimizer 202 to the photovoltaic inverter 300 or connect the photovoltaic module 201 to the photovoltaic inverter 300.

The optimizer 202 is a device configured to: convert a direct current generated by the photovoltaic module 201 into an adjustable direct current, that is, perform direct current to direct current conversion on the direct current output by the photovoltaic module 201, and output the direct current with an adjustable voltage and current, to dynamically control the direct current generated by the photovoltaic module 201.

For example, when one photovoltaic module is shielded, output power of the photovoltaic module 201 (the shielded photovoltaic module 201) in the photovoltaic string 200 is unstable. If there is no optimizer 202, a current of the entire photovoltaic string 200 on the power cable 204 is pulled down to a current (a minimum current) output by the shielded photovoltaic module 201, resulting in a resource waste. The optimizer 202 can balance output power of each photovoltaic module 201, so that overall output power on the power cable 204 is stable. In addition, the optimizer 202 may further cut off an output of a correspondingly connected photovoltaic module 201 in an emergency, to reduce a safety risk.

Each photovoltaic string 200 is connected to the photovoltaic inverter 300 through a power cable 204. Both a positive electrode (PV+) and a negative electrode (PV-) of each photovoltaic string 200 are connected to the photovoltaic inverter 300. In other words, both a power cable 204 at the positive electrode (PV+) and a power cable 204 at the negative electrode (PV-) are connected to a connection end (or a cable port) of the photovoltaic inverter 300, to provide an input source of the photovoltaic inverter 300. The photovoltaic inverter 300 may convert the variable direct current generated by the photovoltaic module 201 into an alternating current with a mains frequency; and the alternating current may be fed back to a commercial power transmission system, or may be used by an off-grid power grid.

Power control and monitoring of the photovoltaic module 201 are a major trend in photovoltaic development, to improve power generation efficiency, manageability, and safety. The photovoltaic module 201 is connected to the direct current power cable 204, and there is no independent communication cable. Therefore, a power line carrier (Power Line Carrier, PLC) communication technology is widely applied to the photovoltaic system 100.

Power line carrier communication may also be briefly referred to as power line communication, carrier communication, PLC communication, or the like, and is a special communication mode in which voice or data transmission is performed through the power cable 204 as an information transmission medium. In other words, power line carrier communication is essentially a manner of modulating a network signal (which may also be referred to as a PLC signal) to the power cable 204, and resolving a network cabling problem through the existing power cable 204.

The photovoltaic inverter 300 and the optimizer 202 are connected to each other through the power cable 204, and information transmission (including information exchange operations such as service query and command control) is performed through the power cable 204, so that the photovoltaic inverter 300 can communicate with the optimizer 202 by using the PLC communication technology. The photovoltaic inverter 300 needs to send a PLC signal to the power cable 204, or receive a PLC signal from the power cable 204.

For example, the photovoltaic inverter 300 collects a signal on the power cable 204, and may learn, by analyzing the signal, whether the photovoltaic module 201 is shielded and whether an angle of the photovoltaic module 201 is appropriate. By capturing and analyzing these signals, the photovoltaic inverter 300 sends an instruction to control the optimizer 202, to implement maximum power output and online monitoring of the photovoltaic module 201, thereby improving efficiency of the photovoltaic system 100.

In addition, an electrical fire is a risk that needs to be prevented in distributed photovoltaics. In the photovoltaic string 200, electric arcs may be generated due to reasons such as loose connectors, poor contact, damp wires, insulation and breakage, and aged cables. The electric arcs generate a high temperature, and may generate an open flame when being strong. In an electrical system, the electric arcs not only cause surrounding insulation materials to decompose or carbonize to lose insulation functions, but also easily cause adjacent materials to reach ignition points and catch fire. Because there are a large quantity of wiring terminals on a direct current side of the photovoltaic system 100, there is a high possibility that electric arcs occur. An arc-fault circuit interrupter technology (AFCI technology) for direct current arcing detection of the photovoltaic system 100 can avoid fires caused by electric arcs.

Direct current arcing detection may be performed via the photovoltaic inverter 300. For example, a current signal on a direct current side (the photovoltaic string 200) of the photovoltaic inverter 300 is first obtained. If the obtained current signal is an analog quantity, the analog current signal further needs to be converted into a digital signal; or if the obtained current signal is already a digital signal, no conversion is required. Whether a spectrum feature of the current signal has a spectrum feature of an electric arc is determined. For example, fast Fourier transform (Fast Fourier Transform, FFT) is performed on the obtained digital signal, to obtain the spectrum feature of the current signal, and then whether the spectrum feature of the current signal has the spectrum feature of the electric arc is further determined. When an electric arc phenomenon occurs, electric arc noise is superimposed on a basic spectrum of the photovoltaic inverter 300, to form the spectrum feature of the electric arc.

In some examples, whether the spectrum feature of the current signal has the spectrum feature of the electric arc may be determined based on a predetermined power threshold (which is set as required). For example, if the spectrum feature of the current signal exceeds the predetermined power threshold, it is determined that the spectrum feature of the current signal has the spectrum feature of the electric arc, and it is considered that the electric arc phenomenon occurs. Otherwise, it is considered that the spectrum feature of the current signal does not have the spectrum feature of the electric arc, that is, it is considered that the electric arc phenomenon does not occur.

An embodiment of this application provides a photovoltaic inverter 300. FIG. 4 illustrates a partial structure of the photovoltaic inverter 300. For example, the photovoltaic inverter 300 includes a housing (not shown in the accompanying drawing) and a circuit board 301. The circuit board 301 is disposed in the housing. The photovoltaic inverter 300 includes a plurality of circuits. The plurality of circuits include a first circuit for direct current arcing detection and a second circuit for power line carrier communication. Both the first circuit and the second circuit are disposed on the circuit board 301. For example, the two circuits (the first circuit and the second circuit) may be integrated into a chip, and the chip is disposed on the circuit board 301.

The first circuit for direct current arcing detection can condition and analyze a sampled current signal, and determine, based on a spectrum feature, whether an electric arc is generated, to quickly determine whether arcing occurs in the photovoltaic system 100, and process the arcing. For example, a current signal of a photovoltaic string 200 is obtained, an analog signal is converted into a digital signal via a conditioning circuit (a signal processing circuit), and whether a spectrum feature of the current signal has a spectrum feature of an electric arc is determined. If an arcing phenomenon is detected, the photovoltaic inverter 300 generates an alarm, the photovoltaic inverter 300 and the optimizer 202 stop running, and a worker checks a line status, and performs maintenance. After the system recovers, the photovoltaic inverter and the optimizer are powered on again.

In addition, the sampled current signal may be debugged into a digital signal through a PLC carrier after being fed back to a second circuit for power line carrier communication. The photovoltaic inverter 300 receives a PLC signal sent by the optimizer 202, or the photovoltaic inverter 300 sends a PLC signal to a power cable 204, to effectively detect and control the optimizer 202 or the photovoltaic string 200 at a distance.

With reference to FIG. 4, the photovoltaic inverter 300 further includes a current transformer 302, to sample an input current on the power cable 204. The current transformer 302 is disposed on the circuit board 301.

An embodiment of this application provides a current transformer 302. With reference to FIG. 4, the example current transformer 302 includes a magnetic core 1 and a winding. The winding is wound on the magnetic core 1. The magnetic core is provided with a first winding hole 101, and at least a part of the winding is wound at the first winding hole 101. Being wound at the first winding hole 101 means that the winding is wound on a magnetic column around the first winding hole 101 and passes through the first winding hole 101.

For example, with reference to FIG. 4, the magnetic core 1 may include a first magnetic column 11, a second magnetic column 12, a third magnetic column 13, and a fourth magnetic column 14. An extension direction of the first magnetic column 11 is parallel to an extension direction of the fourth magnetic column 14. Both the second magnetic column 12 and the third magnetic column 13 are located between the first magnetic column 11 and the fourth magnetic column 14. The second magnetic column 12 and the third magnetic column 13 are distributed in the extension direction of the first magnetic column 11. For example, the second magnetic column 12 and the third magnetic column 13 may be located at two ends of the first magnetic column 11. In some examples, the fourth magnetic column 14 extends from the second magnetic column 12 to the third magnetic column 13. In other words, the second magnetic column 12 and the third magnetic column 13 may also be located at two ends of the fourth magnetic column 14. In the example shown in FIG. 4, the first winding hole 101 may be located between the second magnetic column 12 and the third magnetic column 13. In addition, the winding passing through the first winding hole 101 (or the winding at the first winding hole 101) is located between the second magnetic column 12 and the third magnetic column 13.

The magnetic core 1 may be of a spliced structure. For example, with reference to FIG. 4, the magnetic core 1 is of a CI type or a UI type, that is, a C-type magnetic core and an I-type magnetic core are spliced, or a U-type magnetic core and an I-type magnetic core are spliced, to help adjust performance such as a magnetic inductance. In another example, the magnetic core 1 may alternatively be an SQ magnetic core or a toroidal magnetic core. In addition, a material of the magnetic core 1 may be any suitable material, for example, manganese-zinc ferrite or nickel-zinc ferrite. This is not specifically limited in this application.

The first winding hole 101 is of a through-hole structure formed on the magnetic core 1. A size of the first winding hole 101 may be set based on the winding. This is not specifically limited in this application.

To reduce a possibility of saturation of the magnetic core 1, a gap (or an air gap) may be disposed on the magnetic core 1. For example, a gap may be disposed between the second magnetic column 12 and the fourth magnetic column 14, or a gap may be disposed between the third magnetic column 13 and the fourth magnetic column 14. In another example, when the CI-type or UI-type magnetic core 1 is used, no gap may be disposed on the magnetic core 1. This is not specifically limited in this application.

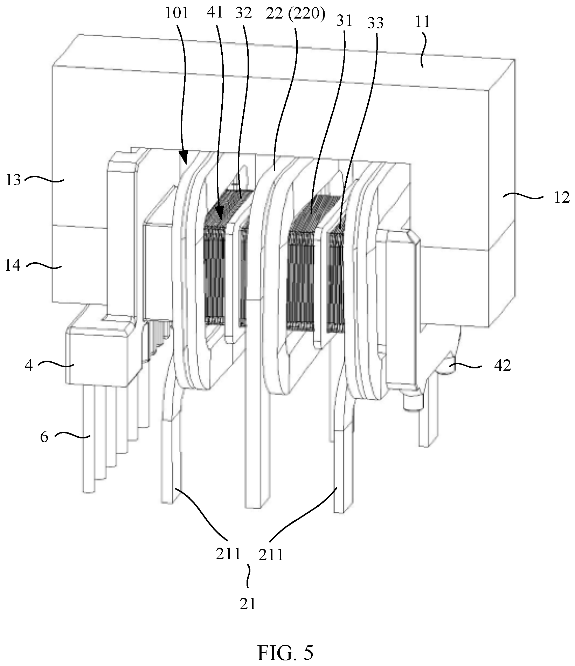

The winding of the current transformer 302 in this application may include a primary-side winding and a secondary-side winding, and a current on the primary-side winding may be coupled to the secondary-side winding via the magnetic core 1. FIG. 5 illustrates a structure of a primary-side winding and a secondary-side winding. With reference to FIG. 5, the winding may include a first primary-side winding 21, a first secondary-side winding 31, and a second secondary-side winding 32. When a current flows through the first primary-side winding 21, currents may be induced on the first secondary-side winding 31 and the second secondary-side winding 32 via the magnetic core 1. In the example shown in FIG. 5, the first primary-side winding 21, the first secondary-side winding 31, and the second secondary-side winding 32 all pass through the first winding hole 101.

The first primary-side winding 21 is configured to electrically connect to a positive electrode (PV+) or a negative electrode (PV-) of at least one photovoltaic string 200. For example, the first primary-side winding 21 may be electrically connected to a positive electrode of one photovoltaic string 200, or may be electrically connected to positive electrodes of a plurality of photovoltaic strings 200. For another example, the first primary-side winding 21 may be electrically connected to a negative electrode of one photovoltaic string 200, or may be electrically connected to negative electrodes of a plurality of photovoltaic strings 200. One of the first secondary-side winding 31 and the second secondary-side winding 32 is electrically connected to a first circuit for direct current arcing detection, and the other of the first secondary-side winding and the second secondary-side winding is electrically connected to a second circuit for power line carrier communication. In other words, in the current on the first secondary-side winding 31 and the current on the second secondary-side winding 32, one current is fed back to the first circuit for direct current arcing detection, to perform analysis and determine, based on a spectrum feature, whether an electric arc is generated; and the other current is fed back to the second circuit for power line carrier communication, to perform communication control on an optimizer 202 at a distance.

For example, the first secondary-side winding 31 is electrically connected to the first circuit, and the second secondary-side winding 32 is electrically connected to the second circuit. For another example, the second secondary-side winding 32 is electrically connected to the first circuit, and the first secondary-side winding 31 is electrically connected to the second circuit.

In addition, to detect whether the first circuit for direct current arcing detection normally runs, a third circuit (for example, a self-check circuit) configured to test the first circuit is further disposed on the circuit board 301. The third circuit may have a plurality of types. For example, a noise (for example, an arcing signal) generation circuit may be disposed in the third circuit. The noise generation circuit may generate a noise signal whose spectrum feature is the same as that of an electric arc noise signal, so that the third circuit may output the noise signal to the first circuit, to test whether the first circuit can detect the noise signal, and accordingly determine whether a function of the first circuit is normal.

With reference to FIG. 5, the winding may further include a third secondary-side winding 33 wound on the magnetic core 1, and the third secondary-side winding 33 is electrically connected to the third circuit, to feed back a current signal to the third circuit. When a current flows through the first primary-side winding 21, the third secondary-side winding 33 feeds back an induced current to the third circuit, to test whether the first circuit for direct current arcing detection normally runs. If the first circuit normally runs, an accurate result can be obtained after the current induced on the first secondary-side winding 31 is fed back to the first circuit for analysis.

In some examples, both the first circuit for direct current arcing detection and the third circuit for testing the first circuit may belong to a circuit for implementing an arcing detection function. In other words, in the circuit for implementing the arcing detection function, the first circuit is a detection circuit, and the third circuit is a self-check circuit for testing the detection circuit.

According to the foregoing technical solution, at least two functions can be implemented via one current transformer 302, to effectively complete arcing detection and communication control on the photovoltaic string 200. This reduces a board area occupied by the current transformer 302, and saves internal space of the photovoltaic inverter 300. The current transformer has low costs, is easy to produce and manufacture, and has strong manufacturability.

The current transformer 302 is usually disposed at a position close to a cable port that is on the photovoltaic inverter 300 and that is configured to connect to a power cable 204 (with auxiliary reference to FIG. 1), for example, a positive port (one or more) and a negative port (one or more) of the photovoltaic inverter 300. To make a direct current arcing detection result more accurate, in an example, with reference to FIG. 4 and FIG. 5, the winding further includes a second primary-side winding 22, the first primary-side winding 21 is configured to electrically connect to the positive electrode (PV+) of the at least one photovoltaic string 200, and the second primary-side winding 22 is configured to electrically connect to the negative electrode (PV-) of the at least one photovoltaic string 200. When a current flows through the first primary-side winding 21 and the second primary-side winding 22, currents may be induced on the first secondary-side winding 31 and the second secondary-side winding 32 via the magnetic core 1, so that AFCI detection can be preferentially performed on the current at the positive port and the negative port of the photovoltaic inverter 300 before the current is filtered or passes through another device. In this way, the direct current arcing detection result is more accurate.

In the examples shown in FIG. 4 and FIG. 5, the second primary-side winding 22 is completely wound at the first winding hole 101. In another example, a part of the second primary-side winding 22 is wound at the first winding hole 101, and the other part of the second primary-side winding is wound at another position of the magnetic core 1. For example, in an example in which the magnetic core 1 further includes another winding hole, the second primary-side winding 22 is wound at both the first winding hole 101 and the another winding hole (one or more).

In an example, with reference to FIG. 1, the photovoltaic system 100 includes a plurality of photovoltaic strings 200, and each photovoltaic string 200 inputs a current to the photovoltaic inverter 300. Still refer to FIG. 4 and FIG. 5. The first primary-side winding 21 may include a plurality of first coils 211 that are not connected to each other. The plurality of first coils 211 are spaced apart side by side. Two ends of each first coil 211 are electrically connected to the circuit board 301. Each first coil 211 is correspondingly electrically connected to a positive electrode of one photovoltaic string 200. In other words, the plurality of first coils 211 are correspondingly electrically connected to PV+ of the plurality of photovoltaic strings 200 respectively.

To reduce a volume of the primary-side winding, in the examples provided in FIG. 4 and FIG. 5, the second primary-side winding 22 may converge multiple currents into one current. In other words, the second primary-side winding 22 may be one coil (a second coil 220), and the second coil 220 is electrically connected to negative electrodes of a plurality of photovoltaic modules 201. A cross-sectional area of the second coil 220 is greater than a cross-sectional area of a single first coil 211. When a current is loaded, a sum of currents flowing through the plurality of first coils 211 is equal to the current flowing through the second coil 220. In addition, the design manner meets a cabling requirement of the circuit board 301.

In addition, in some examples, a part that is of the second coil 220 and that is wound at the first winding hole 101 may be disposed in the middle of the first winding hole 101. With reference to FIG. 5, the second coil 220 is located in the middle of the first winding hole 101. At least one first coil 211 is disposed on each of two sides of the part that is of the second coil 220 and that is wound at the first winding hole. In other words, one first coil 211 may be disposed on each of two sides of the second coil 220 (an example shown in FIG. 5); or one first coil 211 may be disposed on one side of the second coil 220, and a plurality of first coils 211 may be disposed on the other side of the second coil; or a plurality of first coils 211 may be disposed on each of two sides of the second coil 220.

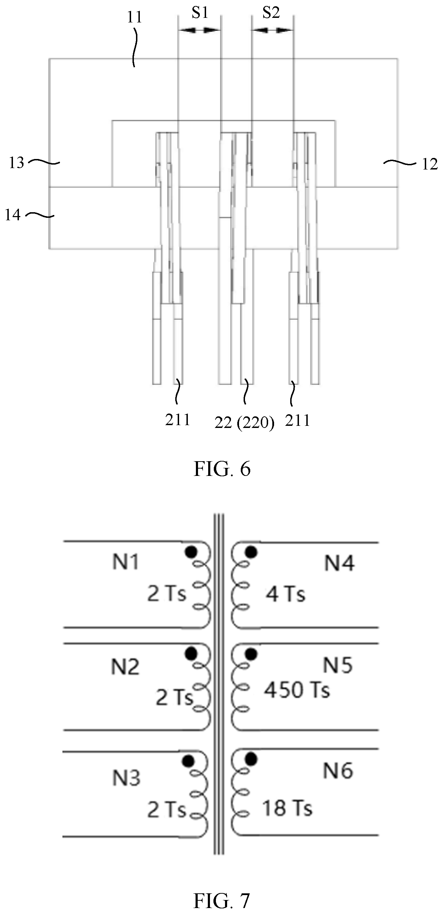

Two first coils 211 adjacent to the part that is of the second coil 220 and that is wound at the first winding hole 101 are at an equal distance from the part that is of the second coil 220 and that is wound at the first winding hole 101. FIG. 6 illustrates a manner of measuring distances between the second coil 220 and the first coils 211. S1 represents a distance from the first coil 211 on one side to the second coil 220, and the distance is a minimum distance between a side surface that is of the first coil 211 on this side and that faces the second coil 220 and a side surface that is of the second coil 220 and that faces the first coil 211 on this side. S2 represents a distance from the first coil 211 on the other side to the second coil 220, and the distance is a minimum distance between a side surface that is of the first coil 211 on this side and that faces the second coil 220 and a side surface that is of the second coil 220 and that faces the first coil 211 on this side.

The equal distances are only expected in an initial design. After the current transformer 302 is actually used in a product, an error is allowed when the distance S1 and the distance S2 are measured. For example, the measurement error may be allowed to be within ±10 mm. In other words, if a difference between values of S1 and S2 is not greater than 10 mm, the distances are considered to be equal.

The coil of the winding is designed close to the middle of the winding hole, so that magnetic leakage can be reduced. The part that is of the second coil 220 and that is in the first winding hole 101 may be disposed at the middle position of the first winding hole 101. In addition, to reduce magnetic leakage of the first coil 211, the plurality of first coils 211 are disposed as close as possible to the middle of the first winding hole 101. In this case, the plurality of first coils 211 may be distributed on the two sides of the part that is of the second coil winding 110 and that is wound at the first winding hole 101, and are as close as possible to the second coil 220. However, there is a requirement on the distance between the first coil 211 and the second coil 220. In this case, when a minimum spacing is met (allowed minimum values of S1 and S2), the distances between the second coil 220 and the first coils 211 on the two sides are the same, or are symmetrically designed. In this way, a leakage inductance can be reduced, and impact on amplitude precision of the detection signal is reduced.

In another example, when the photovoltaic system 100 includes a plurality of photovoltaic strings 200, the second primary-side winding 22 may alternatively include a plurality of coils, the plurality of coils correspond to the plurality of first coils 211 respectively, and each coil of the second primary-side winding 22 is electrically connected to a negative electrode of one photovoltaic string 200.

In another example, when the photovoltaic system 100 includes only one photovoltaic string 200, the first primary-side winding 21 includes only one coil, the coil is electrically connected to a positive electrode of the photovoltaic module 201, the second primary-side winding 22 includes one second coil 220, and the second coil 220 is electrically connected to a negative electrode of the photovoltaic module 201.

FIG. 7 illustrates a principle of the current transformer 302 in this application. "Ts" in the figure represents a quantity of turns of a coil or a winding. For example, 2 Ts are two turns. In FIG. 7, N1 (2 Ts) and N3 (2 Ts) are two first coils 211, N2 (2 Ts) is the second coil 220 of the second primary-side winding 22, N4 (4 Ts) is a winding (for example, the second secondary-side winding 32) electrically connected to the second circuit, N5 (450 Ts) is a winding (for example, the first secondary-side winding 31) electrically connected to the first circuit, and N6 (18 Ts) is the third secondary-side winding 33.

A quantity of turns of a winding for detecting arcing is related to an inductance required for AFCI detection and accuracy of the detection signal. For example, a quantity of turns of a winding for sampling an arcing signal is relatively large; and a larger quantity of turns indicates a higher inductance and a stronger signal coupled to the winding. This can improve sampling accuracy, and make an arcing detection result more accurate. In addition, when the current transformer 302 is designed, a direct current bias characteristic also needs to be met, to resist a direct current bias.

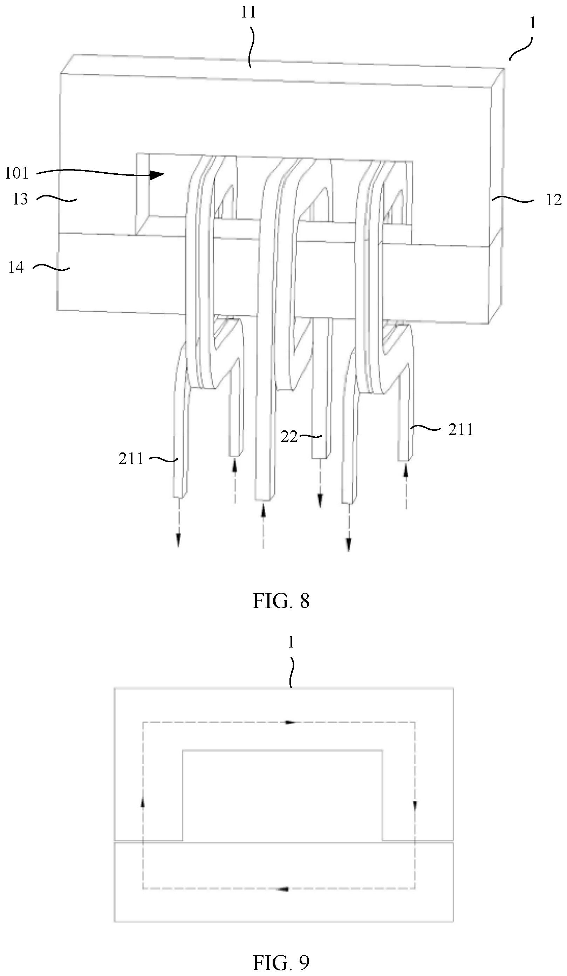

A common-mode current is one of inherent features of the photovoltaic system. A high-frequency common-mode current not only increases a system loss and generates a grid-connected current harmonic, but also causes problems such as electromagnetic interference, and even threatens personal safety. To suppress the common-mode current, in an example in which the magnetic core 1 includes the first winding hole 101, the first primary-side winding 21 and at least a part of the second primary-side winding 22 are wound at the first winding hole 101. After a current is loaded, when the first primary-side winding 21 and the second primary-side winding 22 conduct a differential-mode current, a direction of a magnetic flux generated, on the magnetic core 1, by a part that is of the second primary-side winding 22 and that is wound at the first winding hole 101 is the same as that of a magnetic flux generated by the first primary-side winding 21 on the magnetic core 1. FIG. 8 illustrates a current flow direction. In this example, both the first primary-side winding 21 and the second primary-side winding 22 are wound at the first winding hole 101. In FIG. 8, lower dashed arrows indicate flow directions of currents flowing through different coils (or windings). In addition, the flow direction is merely an example, and is not intended to limit this application.

With reference to FIG. 8, in an example in which the first primary-side winding 21 includes a plurality of first coils 211, a current flowing through the first coil 211 flows in from one end of an inner side of the first coil 211 in the accompanying drawing, and flows out from one end of an outer side of the first coil 211 in the accompanying drawing. A current flowing through the second primary-side winding 22 flows in from one end of an outer side of the second primary-side winding 22 in the accompanying drawing, and flows out from one end of an inner side of the second coil 220 in the accompanying drawing. FIG. 9 illustrates magnetic circuit directions (a dashed box with arrows) of the first primary-side winding 21 and the second primary-side winding 22 on the magnetic core 1 in FIG. 8. It can be seen that the magnetic circuit directions of the first primary-side winding 21 and the second primary-side winding 22 on the magnetic core 1 are the same based on current directions and winding manners of the first primary-side winding 21 and the second primary-side winding 22. In other words, after the current is loaded, when the first primary-side winding 21 and the second primary-side winding 22 conduct the differential-mode current, the direction of the magnetic flux generated, on the magnetic core 1, by the part that is of the second primary-side winding 22 and that is wound at the first winding hole 101 is the same as that of the magnetic flux generated by the first primary-side winding 21 on the magnetic core 1.

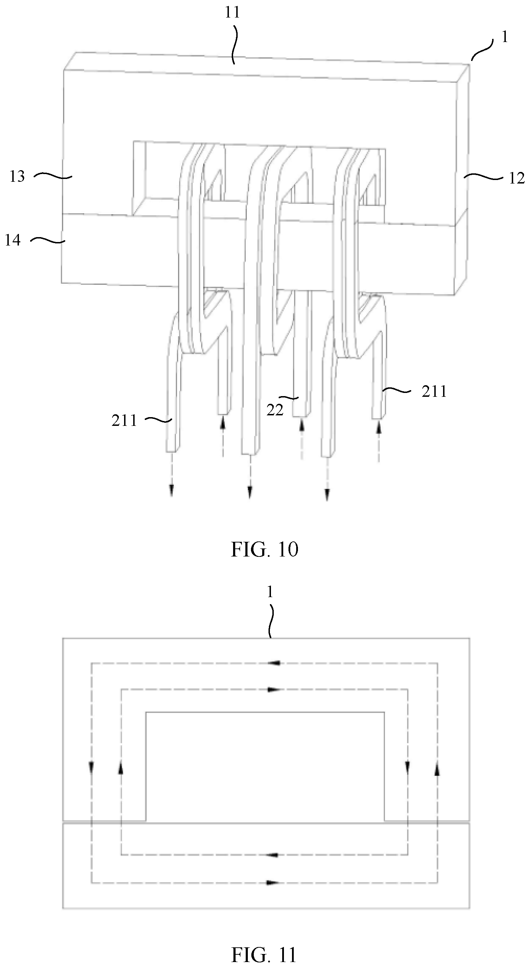

In this way, when the common-mode current flows through the first primary-side winding 21 and the second primary-side winding 22, that is, when the first primary-side winding 21 and the second primary-side winding 22 conduct the common-mode current, magnetic fluxes with opposite directions are generated on the magnetic core 1 respectively. FIG. 10 illustrates flow directions of the common-mode current on the first primary-side winding 21 and the second primary-side winding 22. FIG. 11 illustrates magnetic circuits (two dashed boxes with arrows) on the magnetic core 1 in a case in which the common-mode current flows. In the two magnetic circuit directions in FIG. 11, an outer magnetic circuit direction is a direction of a magnetic flux generated on the magnetic core 1 when the common-mode current flows through the second primary-side winding 22, and an inner magnetic circuit direction is a direction of a magnetic flux generated on the magnetic core 1 when the common-mode current flows through the first primary-side winding 21.

It can be seen from FIG. 10 and FIG. 11 that, when the common-mode current flows through the first primary-side winding 21 and the second primary-side winding 22, the first primary-side winding and the second primary-side winding generate the magnetic fluxes with opposite directions on the magnetic core 1, and the magnetic fluxes can be at least partially mutually offset, to suppress the common-mode current. This reduces a possibility that the common-mode current interferes with another device, and improves electromagnetic compatibility (Electro Magnetic Compatibility, EMC) of the system.

In addition, with reference to FIG. 6, in an example in which the first primary-side winding 21 includes a plurality of first coils 211, the plurality of first coils 211 have a same quantity of turns, and a quantity of turns of the second coil 220 wound at the first winding hole 101 is equal to the quantity of turns of each first coil 211. When the common-mode current flows through the first primary-side winding 21 and the second primary-side winding 22, magnetic fluxes with opposite magnetic flux directions are generated on the magnetic core 1 respectively. When the quantity of turns of the second coil 220 at the first winding hole 101 is equal to a quantity of turns of a single first coil 211, after the common-mode current flows through the first primary-side winding 21 and the second primary-side winding 22, magnetic fluxes with an equal magnitude are generated on the magnetic core 1 respectively, so that more magnetic fluxes generated by the common-mode current on the magnetic core 1 can be offset. This further reduces a possibility that the common-mode current interferes with another device.

The primary-side winding and the secondary-side winding may be wound at any suitable position. For ease of a connection (for example, soldering) between the winding and the circuit board 301, with reference to FIG. 4 and FIG. 5, the primary-side winding and the secondary-side winding may be disposed on a same side (a side close to the circuit board 301) of the magnetic core 1. For example, the fourth magnetic column 14 is located on a side that is of the first magnetic column 11 and that faces the circuit board 301. The first primary-side winding 21, the second primary-side winding 22, the first secondary-side winding 31, the second secondary-side winding 32, and the third secondary-side winding 33 are all wound on the fourth magnetic column 14. In addition, the primary-side winding may be wound on a periphery of the secondary-side winding.

With reference to FIG. 5, the current transformer 302 further includes a first insulation sleeve 4 sleeved on the magnetic core 1. The first insulation sleeve 4 passes through the first winding hole 101, and the first insulation sleeve 4 is sleeved on the fourth magnetic column 14. The first secondary-side winding 31, the second secondary-side winding 32, and the third secondary-side winding 33 are all wound outside the first insulation sleeve 4. The primary-side winding is wound on the periphery of the corresponding secondary-side winding. For example, with reference to FIG. 5, both the first primary-side winding 21 and the second primary-side winding 22 are wound on peripheries of the first secondary-side winding 31, the second secondary-side winding 32, and the third secondary-side winding 33.

In addition, with reference to FIG. 4, an insulation tape 7 may be disposed between the primary-side winding and the corresponding secondary-side winding, to insulate the primary-side winding from the secondary-side winding. After the first secondary-side winding 31, the second secondary-side winding 32, and the third secondary-side winding 33 are wound, the insulation tape 7 is first wound, and then, the first primary-side winding 21 and the second primary-side winding 22 are wound.

A sequence of winding the primary-side winding and the secondary-side winding and an assembly step of the current transformer 302 are not specifically limited in this application.

A large quantity of secondary-side windings are wound on the first insulation sleeve 4. There are distributed capacitances between turns of the first secondary-side winding 31, between turns of the second secondary-side winding 32, and between turns of the third secondary-side winding 33. To reduce the distributed capacitance, the first insulation sleeve 4 may use a separate structure. For example, with reference to FIG. 5, a plurality of mutually separated grooves 41 are disposed on the first insulation sleeve 4, and the first secondary-side winding 31, the second secondary-side winding 32, and the third secondary-side winding 33 are wound in the plurality of grooves 41, to reduce the distributed capacitances of the first secondary-side winding 31, the second secondary-side winding 32, and the third secondary-side winding 33.

A current sampled by the current transformer 302 is relatively low (a high current on a primary side is converted into a low current on a secondary side), to protect the circuit board 301. Therefore, the secondary-side winding is relatively thin. For ease of a connection between the secondary-side winding and the circuit board 301, a plurality of pins 6 may be disposed on the first insulation sleeve 4. For example, with reference to FIG. 4, six pins 6 are disposed on the first insulation sleeve 4, two ends of the first secondary-side winding 31 are connected to two pins 6 on the first insulation sleeve 4, two ends of the second secondary-side winding 32 are connected to other two pins 6 on the first insulation sleeve 4, and two ends of the third secondary-side winding 33 are connected to the remaining two pins 6 on the first insulation sleeve 4.

With reference to FIG. 4, the primary-side winding is relatively thick, and two ends of the first primary-side winding 21 and two ends of the second primary-side winding 22 may be directly soldered to the circuit board 301.

In addition, with reference to FIG. 4, the current transformer 302 may further include an insulation support 8, to support the magnetic core 1. The insulation support 8 is disposed on the circuit board 301, and a support block 81 (one or more) is disposed on the insulation support 8. The support block 81 supports the magnetic core 1, so that there is a gap between the magnetic core 1 and the insulation support 8, to facilitate winding of the coil or the winding. A plurality of through holes 82 are disposed on the insulation support 8, the two ends of the first primary-side winding 21 and the two ends of the second primary-side winding 22 pass through corresponding through holes 82 respectively, and the plurality of pins 6 also pass through corresponding through holes respectively, so that both the pins 6 and end parts of the primary-side windings extend to the bottom of the insulation support 8, to facilitate the connection to the circuit board 301.

The first insulation sleeve 4 may also be connected to the insulation support 8. For example, the first insulation sleeve 4 may be inserted into the insulation support 8. With reference to FIG. 4 and FIG. 5, at least one first insert pin 42 is disposed on the first insulation sleeve 4, a corresponding quantity of sockets 83 are disposed on the insulation support 8, and the first insert pin 42 is separately inserted into a corresponding socket 83, to prevent the first insulation sleeve 4 from randomly moving.

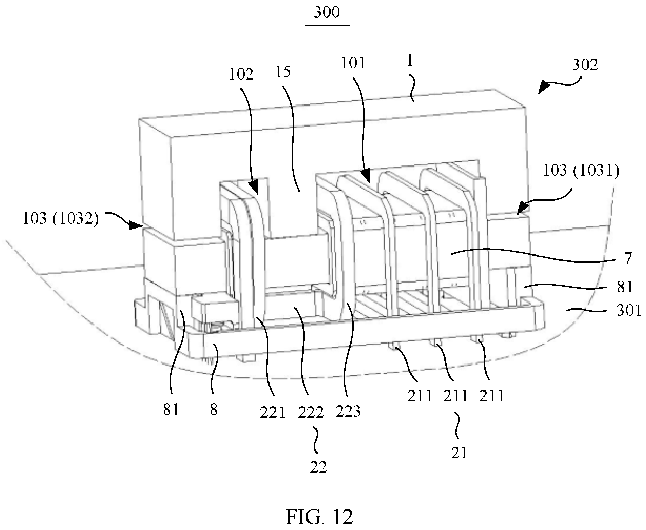

An embodiment of this application further provides another current transformer 302. FIG. 12 illustrates a structure of the another current transformer 302. The example current transformer 302 includes a magnetic core 1 and a winding, and the winding is wound on the magnetic core 1. The magnetic core 1 includes a first winding hole 101, a second winding hole 102, and a center column 15 located between the first winding hole 101 and the second winding hole 102.

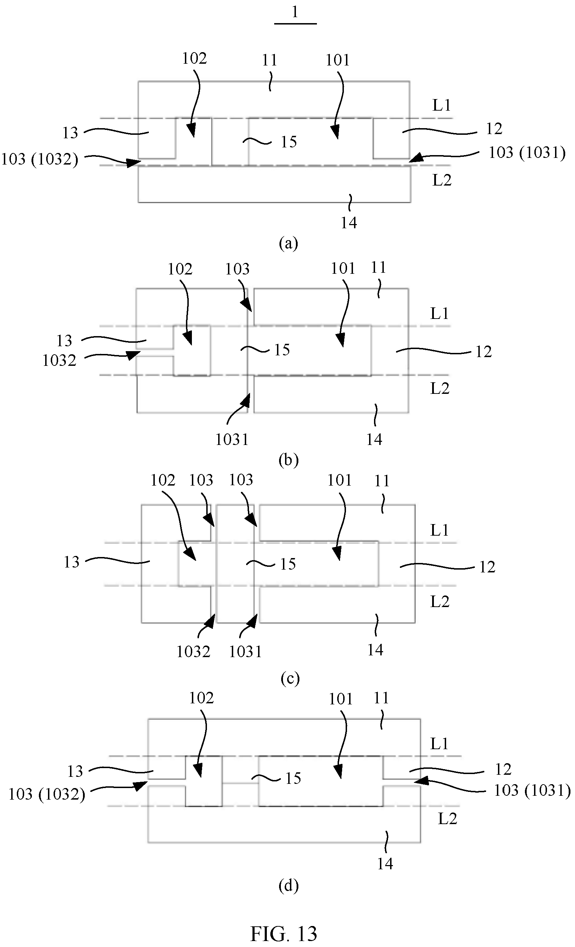

FIG. 13 illustrates structures of a plurality of magnetic cores 1. With reference to FIG. 13, the magnetic core 1 includes a first magnetic column 11, a second magnetic column 12, a third magnetic column 13, the center column 15, and a fourth magnetic column 14. An extension direction of the first magnetic column 11 is parallel to an extension direction of the fourth magnetic column 14. The second magnetic column 12, the third magnetic column 13, and the center column 15 are all located between the first magnetic column 11 and the fourth magnetic column 14. The second magnetic column 12 and the third magnetic column 13 are distributed in the extension direction of the first magnetic column 11. In an example, the second magnetic column 12 and the third magnetic column 13 may be located at two ends of the first magnetic column 11, the center column 15 is located between the second magnetic column 12 and the third magnetic column 13, and the fourth magnetic column 14 extends from the second magnetic column 12 to the third magnetic column 13. The first winding hole 101 is located between the second magnetic column 12 and the center column 15, and the second winding hole 102 is located between the third magnetic column 13 and the center column 15.

In examples indicated by (a), (b), (c), and (d) in FIG. 13, a magnetic column above a dashed line L1 is the first magnetic column 11; a magnetic column below a dashed line L2 is the fourth magnetic column 14; and in three magnetic columns between the dashed line L1 and the dashed line L2, a magnetic column on a rightmost side is the second magnetic column 12, a magnetic column on a leftmost side is the third magnetic column 13, a magnetic column in the middle is the center column 15. The first winding hole 101 and the second winding hole 102 are distributed in the extension direction of the first magnetic column 11.

With reference to FIG. 13, at least one air gap 103 is disposed on each of parts that are of the magnetic core 1 and that are on two sides of the center column 15. In other words, at least two air gaps 103 are disposed on the magnetic core 1, and at least one air gap 103 is disposed on either of the two sides of the center column 15.

In the magnetic core 1 (EI type) shown in (a) in FIG. 13, the second magnetic column 12, the third magnetic column 13, and the center column 15 are all connected to a same side of the first magnetic column 11, the center column 15 is in contact with the fourth magnetic column 14, and air gaps 103 are formed between the second magnetic column 12 and the fourth magnetic column 14 and between the third magnetic column 13 and the fourth magnetic column 14 respectively. In other words, the magnetic core 1 is provided with two air gaps 103, and the two air gaps 103 are located on different sides of the center column 15 respectively. The two air gaps 103 are a first air gap 1031 and a second air gap 1032 respectively. The first air gap 1031 is formed between the second magnetic column 12 and the fourth magnetic column 14, and the second air gap 1032 is formed between the third magnetic column 13 and the fourth magnetic column 14.

In the magnetic core 1 (OC type) shown in (b) in FIG. 13, each of the first magnetic column 11, the second magnetic column 12, and the fourth magnetic column 14 is provided with an air gap 103. The air gaps 103 (one of the air gaps is a first air gap 1031) on the first magnetic column 11 and the fourth magnetic column 14 are disposed on a right side of the center column 15, the air gap 103 (a second air gap 1032) on the third magnetic column 13 is disposed on a left side of the center column 15, and the air gaps 103 are disposed on the both sides of the center column 15.

In the magnetic core 1 (CIC type) shown in (c) in FIG. 13, two air gaps 103 are disposed on each of the first magnetic column 11 and the fourth magnetic column 14. The two air gaps 103 on the first magnetic column 11 are located on different sides of the center column 15 respectively, the two air gaps 103 on the fourth magnetic column 14 are located on the different sides of the center column 15 respectively, and the two air gaps 103 are disposed on each of the two sides of the center column 15. On the first magnetic column 11, the air gap 103 on the left side of the center column 15 may be a second air gap 1032, and the air gap 103 on the right side of the center column 15 may be a first air gap 1031. Alternatively, on the fourth magnetic column 14, the air gap 103 on the left side of the center column 15 may be a second air gap 1032, and the air gap 103 on the right side of the center column 15 may be a first air gap 1031. Alternatively, the air gap 103 on the left side of the center column 15 and on the first magnetic column 11 may be a second air gap 1032, and the air gap 103 on the right side of the center column 15 and on the fourth magnetic column 14 may be a first air gap 1031.

In the magnetic core 1 (double-E type) shown in (d) in FIG. 13, a first air gap 1031 is disposed on the second magnetic column 12, and a second air gap 1032 is disposed on the third magnetic column 13. The two air gaps 103 are located on different sides of the center column 15 respectively. The center column 15 may include a first sub-column and a second sub-column. The first sub-column is connected to the first magnetic column 11, and the second sub-column is connected to the fourth magnetic column 14. An end part that is of the first sub-column and that is away from the first magnetic column 11 is in contact with an end part that is of the second sub-column and that is away from the fourth magnetic column 14. That is, in this example, the center column 15 may be formed by splicing two sub-columns (the first sub-column and the second sub-column).

It should be noted that the "up", "down", "left", and "right" are merely reference directions in the drawings, and are intended for ease of explanation and description, but are not intended to limit this application.

In addition, both the first winding hole 101 and the second winding hole 102 are of through-hole space structures formed on the magnetic core 1. Sizes of the first winding hole 101 and the second winding hole 102 may be set based on a winding. This is not specifically limited in this application.

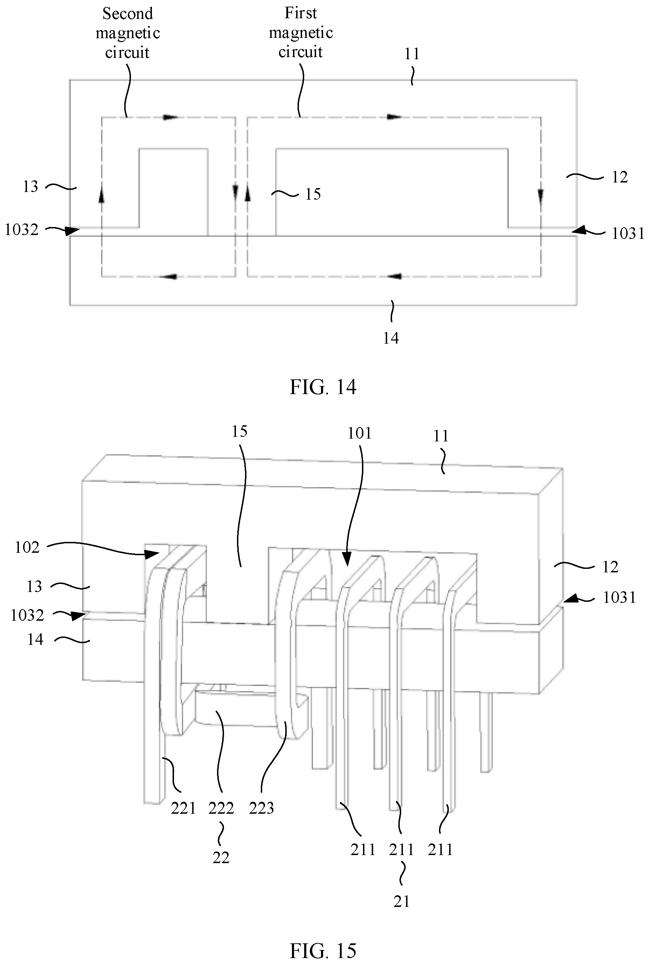

Air gaps 103 are disposed on both sides of the center column 15. A magnetic resistance of the air gap 103 is relatively high, and a magnetic circuit preferentially forms a closed loop at the center column 15. The magnetic core 1 shown in (a) in FIG. 13 is used as an example. When two windings are wound through the first winding hole 101 and the second winding hole 102 respectively, a winding passing through the first winding hole 101 is located between the second magnetic column 12 and the center column 15, a winding passing through the second winding hole 102 is located between the third magnetic column 13 and the center column 15, and the two windings form two magnetic circuits respectively. FIG. 14 illustrates two magnetic circuits (a first magnetic circuit and a second magnetic circuit).

With reference to FIG. 14, because there is no air gap 103 at the center column 15, a magnetic resistance is relatively low, and the two magnetic circuits preferentially form closed loops at the center column 15. For example, for the first magnetic circuit, because there is the second air gap 1032 between the third magnetic column 13 and the fourth magnetic column 14, the first magnetic circuit forms a closed loop at the center column 15 prior to forming a closed loop on the third magnetic column 13. For another example, for the second magnetic circuit, because there is the first air gap 1031 between the second magnetic column 12 and the fourth magnetic column 14, the second magnetic circuit forms a closed loop at the center column 15 prior to forming a closed loop on the second magnetic column 12, to implement mutual decoupling of the first magnetic circuit and the second magnetic circuit. This reduces a possibility that the first magnetic circuit and the second magnetic circuit interfere with each other.

There may be a plurality of options for the structure of the magnetic core 1 in this application. The magnetic core 1 may be of a spliced structure, for example, an E-type magnetic core and an I-type magnetic core are spliced, or double E-type magnetic cores are spliced, to help adjust performance such as a magnetic inductance. In addition, a material of the magnetic core 1 may be any suitable material, for example, manganese-zinc ferrite or nickel-zinc ferrite.

The winding of the current transformer 302 may include a primary-side winding and a secondary-side winding, and a current on the primary-side winding may be coupled to the secondary-side winding via the magnetic core 1.

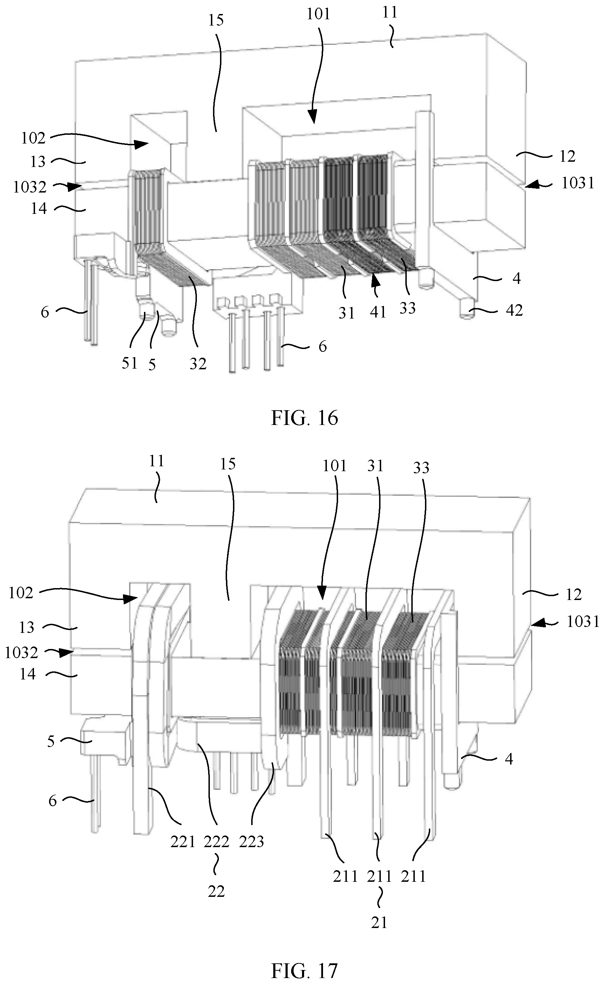

FIG. 15 illustrates a primary-side winding on the magnetic core 1. The primary-side winding may include a first primary-side winding 21 and a second primary-side winding 22 that are wound on the magnetic core 1. The first primary-side winding 21 passes through the first winding hole 101, and a part of the second primary-side winding 22 passes through the second winding hole 102. FIG. 16 illustrates a secondary-side winding on the magnetic core 1. The secondary-side winding may include a first secondary-side winding 31 and a second secondary-side winding 32 that are wound on the magnetic core 1. The first secondary-side winding 31 passes through the first winding hole 101, and the second secondary-side winding 32 passes through the second winding hole 102.

Both the first primary-side winding 21 and the first secondary-side winding 31 pass through the first winding hole 101. In other words, the first primary-side winding 21 corresponds to the first secondary-side winding 31. When a current flows through the first primary-side winding 21, a current may be induced on the first secondary-side winding 31 via the magnetic core 1. The part that is of the second primary-side winding 22 and that passes through the second winding hole 102 corresponds to the second secondary-side winding 32. When a current flows through the second primary-side winding 22, a current may be induced on the second secondary-side winding 32 via the magnetic core 1.

One of the first secondary-side winding 31 and the second secondary-side winding 32 is electrically connected to a first circuit for direct current arcing detection, and the other of the first secondary-side winding and the second secondary-side winding is electrically connected to a second circuit for power line carrier communication. For example, the first secondary-side winding 31 is electrically connected to the first circuit, and the second secondary-side winding 32 is electrically connected to the second circuit. For another example, the second secondary-side winding 32 is electrically connected to the first circuit, and the first secondary-side winding 31 is electrically connected to the second circuit.

In addition, to detect whether the first circuit for direct current arcing detection normally runs, a third circuit (for example, a self-check circuit) configured to test the first circuit is further disposed on the circuit board 301, to determine whether a function of the first circuit is normal. With reference to FIG. 16, the secondary-side winding may further include a third secondary-side winding 33 wound on the magnetic core 1, and the third secondary-side winding 33 is electrically connected to the third circuit. In an example in which the first secondary-side winding 31 is electrically connected to the first circuit for direct current arcing detection, both the third secondary-side winding 33 and the first secondary-side winding 31 pass through the first winding hole 101.

When a current flows through the first primary-side winding 21, the third secondary-side winding 33 feeds back an induced current to the third circuit, to test whether the first circuit for direct current arcing detection normally runs. If the first circuit normally runs, an accurate result can be obtained after the current induced on the first secondary-side winding 31 is fed back to the first circuit for analysis.

At least two functions can be implemented via one integrated magnetic core 1, to effectively complete arcing detection and communication control on a photovoltaic string 200. This reduces a board area occupied by the current transformer 302, and saves internal space of a photovoltaic inverter 300. The current transformer has low costs, is easy to produce and manufacture, and has strong manufacturability.

With reference to FIG. 14, the air gaps 103 are disposed on two sides of the center column 15 respectively. Because there is no air gap 103 at the center column 15, the magnetic resistance is relatively low, and the two magnetic circuits generated by the first primary-side winding 21 and the second primary-side winding 22 preferentially form the closed loops at the center column 15. For example, after a current is loaded, the first primary-side winding 21 forms the first magnetic circuit on the magnetic core 1, and the part that is of the second primary-side winding 22 and that passes through the second winding hole 102 forms the second magnetic circuit on the magnetic core 1. The first magnetic circuit and the second magnetic circuit preferentially form the closed loops at the center column 15, to implement mutual decoupling of the two magnetic circuits. This reduces a possibility that the two magnetic circuits affect each other and interfere with each other, so that two functions: direct current arcing detection and power line carrier communication can be independently performed.

On the basis that the air gaps 103 are disposed on the two sides of the center column 15 respectively, impedance on the center column 15 may be reduced to further make the magnetic circuit preferentially form the closed loop at the center column 15. When a current is loaded, and the first primary-side winding 21 and the second primary-side winding 22 conduct a differential-mode current, a direction of a magnetic flux generated, on the center column 15, by the part that is of the second primary-side winding 22 and that passes through the second winding hole 102 is opposite to that of a magnetic flux generated by the first primary-side winding 21 on the center column 15. That is, directions of magnetic fluxes of the first magnetic circuit and the second magnetic circuit at the center column 15 are opposite, so that the impedance on the center column 15 is relatively low (if the magnetic fluxes are superimposed, relatively high impedance is generated), and the first magnetic circuit and the second magnetic circuit preferentially form the closed loops at the center column 15. This further reduces the possibility that the first magnetic circuit and the second magnetic circuit affect each other and interfere with each other.

It may be understood that a winding manner of the first primary-side winding 21 and a winding direction of the second primary-side winding 22 may be determined as required, provided that the magnetic flux directions of the first magnetic circuit and the second magnetic circuit at the center column 15 are opposite.

The photovoltaic string 200 is equivalent to an input source of the photovoltaic inverter 300. When a current is loaded, the current flowing through the first primary-side winding 21 is equal to the current flowing through the second primary-side winding 22. For example, with reference to FIG. 15, the current at a positive electrode (PV+) of the photovoltaic string 200 flows to the first primary-side winding 21, flows to the second primary-side winding 22, and then returns to a negative electrode (PV-) of the photovoltaic string 200, to form a loop.

There is a parasitic capacitance between a photovoltaic terminal of the photovoltaic inverter 300 and the ground due to existence of a common-mode voltage. When the photovoltaic inverter 300 is powered on for running, the common-mode voltage causes a loop to be formed between the photovoltaic string 200, the photovoltaic inverter 300, a power grid, and the ground, to generate a common-mode current. The common-mode current is one of inherent features of a photovoltaic system 100. A high-frequency common-mode current not only increases a system loss and generates a grid-connected current harmonic, but also causes problems such as electromagnetic interference, and even threatens personal safety.

To suppress the common-mode current, a part of the second primary-side winding 22 is led to the first winding hole 101 and wound at the first winding hole 101. When the current is loaded, and the first primary-side winding 21 and the second primary-side winding 22 conduct the differential-mode current, the part that is of the second primary-side winding 22 and that passes through the first winding hole 101 and the first primary-side winding 21 generate magnetic fluxes with a same direction on the magnetic core 1 respectively.

In other words, one part of the second primary-side winding 22 passes through the second winding hole 102, and one part of the second primary-side winding passes through the first winding hole 101. A winding manner shown in FIG. 15 is used as an example. The second primary-side winding 22 includes one second coil, and the second coil includes a first part 221, a second part 222, and a third part 223 that are integrally disposed. The first part 221 passes through the second winding hole 102 and is wound on the magnetic core 1, the third part 223 passes through the first winding hole 101 and is wound on the magnetic core 1, and the second part 222 is connected to the first part 221 and the third part 223.

After the current is loaded, when the common-mode current flows through the third part 223 and the first primary-side winding 21, magnetic fluxes with a same magnetic flux magnitude and opposite directions are generated on the magnetic core 1 respectively, and the magnetic fluxes generated by the common-mode current on the magnetic core 1 are mutually offset, to suppress the common-mode current. This reduces a possibility of interference to another device, and improves electromagnetic compatibility (Electro Magnetic Compatibility, EMC) of the system.

With reference to FIG. 1, the photovoltaic system 100 includes a plurality of photovoltaic strings 200, and each photovoltaic string 200 inputs a current to the photovoltaic inverter 300. Refer to FIG. 12. The first primary-side winding 21 includes a plurality of first coils 211 that are not connected to each other. The plurality of first coils 211 are spaced apart side by side. Two ends of each first coil 211 are electrically connected to the circuit board 301. Each first coil 211 is correspondingly electrically connected to a positive electrode of one photovoltaic string 200 (the plurality of first coils 211 are correspondingly electrically connected to PV+ of the plurality of photovoltaic strings respectively).

In another example, the second primary-side winding 22 may also include a plurality of coils, and the plurality of coils correspond to the plurality of first coils 211 respectively. However, to reduce a volume of the primary-side winding, the second primary-side winding 22 may converge multiple currents into one current. In other words, the second primary-side winding 22 may be one coil (a second coil), and a cross-sectional area of the second coil is greater than a cross-sectional area of a single first coil 211. When a current is loaded, a sum of currents flowing through the plurality of first coils 211 is equal to the current flowing through the second coil.

In another example, the second primary-side winding 22 may alternatively completely pass through the second winding hole 102, that is, the second primary-side winding 22 is completely wound at the second winding hole 102.

The primary-side winding and the secondary-side winding may be wound at any suitable position. For ease of a connection (for example, soldering) between the winding and the circuit board 301, with reference to FIG. 12, the primary-side winding and the secondary-side winding may be disposed on a same side (a side close to the circuit board 301) of the magnetic core 1.

For example, the fourth magnetic column 14 is located on a side that is of the first magnetic column 11 and that faces the circuit board 301. With reference to FIG. 15, both the first primary-side winding 21 and the second primary-side winding 22 are on around the fourth magnetic column 14, the first primary-side winding 21 is located between the second magnetic column 12 and the center column 15, a part that is of the second primary-side winding 22 and that passes through the second winding hole 102 is located between the third magnetic column 13 and the center column 15, and the part that is of the second primary-side winding 22 and that passes through the first winding hole 101 is located between the second magnetic column 12 and the center column 15. With reference to FIG. 16, the first secondary-side winding 31, the second secondary-side winding 32, and the third secondary-side winding 33 are all wound on the fourth magnetic column 14. The first secondary-side winding 31 and the third secondary-side winding 33 are located between the second magnetic column 12 and the center column 15, and the second secondary-side winding 32 is located between the third magnetic column 13 and the center column 15.

In FIG. 15 and FIG. 16, the magnetic core 1 shown in (a) in FIG. 13 is used as an example. In another example, the winding may alternatively be wound on the fourth magnetic column 14 shown in (b) in FIG. 13, (c) in FIG. 13, or (d) in FIG. 13. In another example, the primary-side winding and the secondary-side winding may alternatively be wound on different magnetic columns respectively.

When the primary-side winding and the corresponding secondary-side winding are wound on a same magnetic column, the primary-side winding may be wound on a periphery of the corresponding secondary-side winding.

The secondary-side winding may be first wound at a corresponding position of the magnetic core 1. For example, with reference to FIG. 16, the current transformer 302 further includes a first insulation sleeve 4 and a second insulation sleeve 5 that are sleeved on the magnetic core 1. The first insulation sleeve 4 passes through the first winding hole 101, and the second insulation sleeve 5 passes through the second winding hole 102. In other words, the first insulation sleeve 4 is located between the second magnetic column 12 and the center column 15, and the second insulation sleeve 5 is located between the third magnetic column 13 and the center column 15. The first secondary-side winding 31 and the third secondary-side winding 33 are wound outside the first insulation sleeve 4, and the second secondary-side winding 32 is wound outside the second insulation sleeve 5.

Then, the primary-side winding is wound on the periphery of the corresponding secondary-side winding. For example, FIG. 17 illustrates winding positions of the primary-side winding and the secondary-side winding. The first primary-side winding 21 is wound on peripheries of the first secondary-side winding 31 and the third secondary-side winding 33, the part (the first part 221) that is of the second primary-side winding 22 and that passes through the second winding hole 102 is wound on a periphery of the second secondary-side winding 32, and the part (the third part 223) that is of the second primary-side winding 22 and that passes through the first winding hole 101 is wound on a periphery of the first secondary-side winding 31 (or the third secondary-side winding 33).

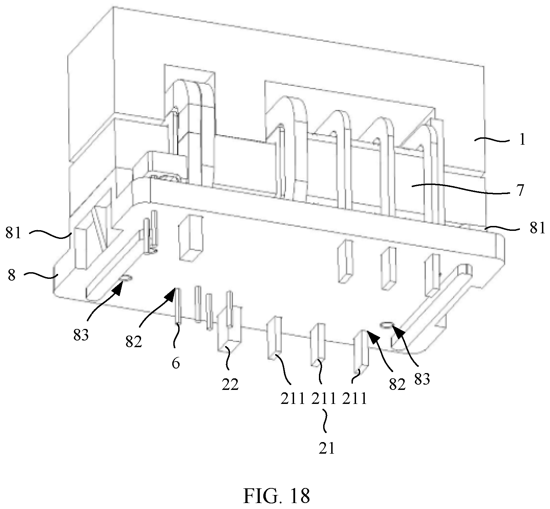

In addition, FIG. 18 illustrates a structure of the current transformer 302 from another perspective, to insulate the primary-side winding from the secondary-side winding. An insulation tape 7 may be disposed between the primary-side winding and the corresponding secondary-side winding. After the secondary-side winding is wound, the insulation tape 7 is wrapped, and then, the primary-side winding is wound. For example, an insulation tape 7 is disposed between the first primary-side winding 21 and the first secondary-side winding 31, and an insulation tape 7 is disposed between the second primary-side winding 22 and the second secondary-side winding 32.

A sequence of winding the primary-side winding and the secondary-side winding and an assembly step of the current transformer 302 are not specifically limited in this application.

A large quantity of secondary-side windings are wound on the first insulation sleeve 4. There are distributed capacitances between turns of the first secondary-side winding 31 and between turns of the third secondary-side winding 33. To reduce the distributed capacitance, the first insulation sleeve 4 may use a separate structure. For example, with reference to FIG. 16, a plurality of mutually separated grooves 41 are disposed on the first insulation sleeve 4, and the first secondary-side winding 31 and the third secondary-side winding 33 are wound in the plurality of grooves 41, to reduce the distributed capacitances of the first secondary-side winding 31 and the third secondary-side winding 33. In addition, the second insulation sleeve 5 may also use the separated structure.

A current sampled by the current transformer 302 is relatively low (a high current on a primary side is converted into a low current on a secondary side), to protect the circuit board 301. Therefore, the secondary-side winding is relatively thin. For ease of a connection between the secondary-side winding and the circuit board 301, pins 6 may be disposed on both the first insulation sleeve 4 and the second insulation sleeve 5. For example, with reference to FIG. 16, four pins 6 are disposed on the first insulation sleeve 4, two ends of the first secondary-side winding 31 are connected to two pins 6 on the first insulation sleeve 4, and two ends of the third secondary-side winding 33 are connected to the other two pins 6 on the first insulation sleeve 4. Two pins 6 are disposed on the second insulation sleeve 5, and two ends of the second secondary-side winding 32 are connected to the two pins 6 on the second insulation sleeve.

With reference to FIG. 17, the primary-side winding is relatively thick, and two ends of the first primary-side winding 21 and two ends of the second primary-side winding 22 may be directly soldered to the circuit board 301.

In addition, with reference to FIG. 18, the current transformer 302 may further include an insulation support 8, to support the magnetic core 1. The insulation support 8 is disposed on the circuit board 301, and a support block 81 is disposed on the insulation support 8. The support block 81 supports the magnetic core 1, so that there is a gap between the magnetic core 1 and the insulation support 8. A plurality of through holes 82 are disposed on the insulation support 8, the two ends of the first primary-side winding 21 and the two ends of the second primary-side winding 22 pass through corresponding through holes 82 respectively, and the plurality of pins 6 also pass through corresponding through holes respectively, so that both the pins 6 and end parts of the primary-side windings extend to the bottom of the insulation support 8, to facilitate the connection to the circuit board 301.

The first insulation sleeve 4 and the second insulation sleeve 5 may also be connected to the insulation support 8. For example, the first insulation sleeve 4 and the second insulation sleeve 5 may be inserted into the insulation support 8. With reference to FIG. 16, at least one first insert pin 42 (FIG. 16 illustrates two first insert pins 42) is disposed on the first insulation sleeve 4, and a plurality of second insert pins 51 (FIG. 16 illustrates two second insert pins 51) are disposed on the second insulation sleeve 5. With reference to FIG. 18, a plurality of sockets 83 are disposed on the insulation support 8, and the first insert pin 42 and the second insert pin 51 are inserted into corresponding sockets 83 respectively, to prevent the first insulation sleeve 4 and the second insulation sleeve 5 from randomly moving.

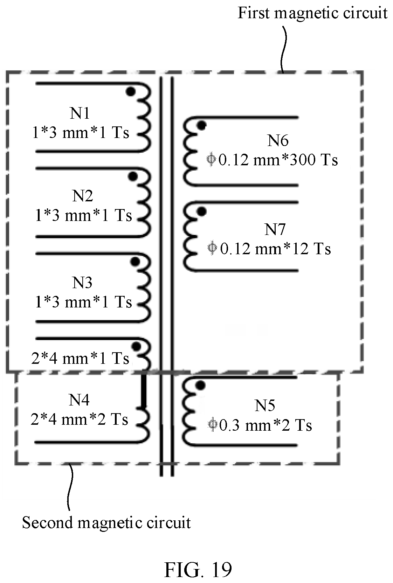

FIG. 19 illustrates a principle of the current transformer 302 according to this application. In the accompanying drawing, N1 (1 Ts), N2 (1 Ts), and N3 (1 Ts) are three first coils 211 of the first primary-side winding 21; N4 is the second primary-side winding, the part that is of N4 and that passes through the first winding hole 101 is wound for one turn (1 Ts), and the part that is of N4 and that passes through the second winding hole 102 is wound for two turns (2 Ts); N6 (300 Ts) is the first secondary-side winding 31; N7 (12 Ts) is the third secondary-side winding 33; and N5 (2 Ts) is the second secondary-side winding 32. A quantity of turns of a winding for sampling an arcing signal is relatively large; and a larger quantity of turns indicates a higher inductance and a stronger signal coupled to the winding. This can improve sampling accuracy, and make an arcing detection result more accurate.

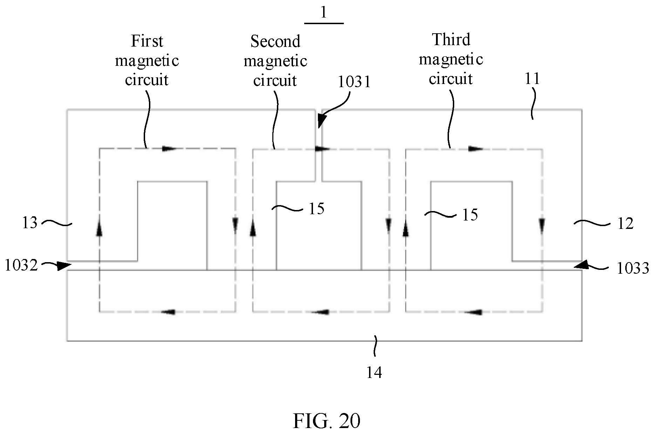

In addition, the current transformer 302 in this application may alternatively be an integration of three or more current transformers. For example, FIG. 20 illustrates a magnetic core 1 of another current transformer 302 provided in this application. The magnetic core 1 includes a first magnetic column 11, a second magnetic column 12, a third magnetic column 13, a fourth magnetic column 14, and two center columns 15. An extension direction of the first magnetic column 11 is parallel to an extension direction of the fourth magnetic column 14. The second magnetic column 12, the third magnetic column 13, and the two center columns 15 are located between the first magnetic column 11 and the fourth magnetic column 14. The second magnetic column 12 and the third magnetic column 13 are located at two ends in the extension direction of the first magnetic column 11. The two center columns 15 are located between the second magnetic column 12 and the third magnetic column 13. The fourth magnetic column 14 extends from the second magnetic column 12 to the third magnetic column 13. Air gaps 103 are disposed on two sides of each center column 15, so that a first magnetic circuit, a second magnetic circuit, and a third magnetic circuit preferentially form closed loops at the two center columns 15.

In another example, the photovoltaic inverter 300 may further include another circuit other than a direct current arcing detection circuit and a PLC circuit. The another circuit may be disposed on the circuit board 301. The first secondary-side winding 31 and the second secondary-side winding 32 may not be electrically connected to the direct current arcing detection circuit and the PLC circuit, and the first secondary-side winding 31 and the second secondary-side winding 32 may be electrically connected to other circuits with different functions respectively. In an example including the third secondary-side winding 33, the third secondary-side winding 33 may also be electrically connected to a circuit with an independent function.

In another example, the current transformer 302 may alternatively be disposed in another device. The first primary-side winding 21 is configured to electrically connect to a power supply, and the first secondary-side winding 31 and the second secondary-side winding 32 are configured to electrically connect to different circuits (circuits with different functions) respectively. A current induced on the first secondary-side winding 31 and a current induced on the second secondary-side winding 32 are fed back to the different circuits respectively. At least two functions can be implemented via one magnetic core 1. This reduces a volume of the current transformer 302 and a board area occupied by the current transformer, and reduces production and manufacturing costs.

The current transformer 302 in this application may be further used in another device, for example, a power supply device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic inverter, comprising:
a circuit board, wherein a first circuit for direct current arcing detection and a second circuit for power line carrier communication are disposed on the circuit board; and
a current transformer, wherein the current transformer is disposed on the circuit board, and the current transformer comprises a magnetic core and a winding wound on the magnetic core; and
the winding comprises a first primary-side winding, a second primary-side winding, a first secondary-side winding, and a second secondary-side winding, the first primary-side winding is configured to electrically connect to a positive electrode of at least one photovoltaic string, the second primary-side winding is configured to electrically connect to a negative electrode of the at least one photovoltaic string, each photovoltaic string comprises at least one photovoltaic module, one of the first secondary-side winding and the second secondary-side winding is electrically connected to the first circuit, and the other of the first secondary-side winding and the second secondary-side winding is electrically connected to the second circuit.

2. The photovoltaic inverter according to claim 1, wherein the magnetic core is provided with a first winding hole, and the first primary-side winding, the second primary-side winding, the first secondary-side winding, and the second secondary-side winding are all wound at the first winding hole; and
when the first primary-side winding and the second primary-side winding conduct a common-mode current, a direction of a magnetic flux generated by the second primary-side winding on the magnetic core is opposite to that of a magnetic flux generated by the first primary-side winding on the magnetic core.

3. The photovoltaic inverter according to claim 2, wherein the magnetic core comprises a first magnetic column, a second magnetic column, a third magnetic column, and a fourth magnetic column; and
the second magnetic column and the third magnetic column are disposed in an extension direction of the first magnetic column, the second magnetic column and the third magnetic column are located on a same side of the first magnetic column, the fourth magnetic column is located on a side that is of the second magnetic column and that is away from the first magnetic column, the fourth magnetic column extends from the second magnetic column to the third magnetic column, and the first magnetic column, the second magnetic column, the third magnetic column, and the fourth magnetic column enclose the first winding hole.

4. The photovoltaic inverter according to claim 1, wherein the magnetic core comprises a first winding hole, a second winding hole, and a center column located between the first winding hole and the second winding hole, a first air gap is disposed at a position other than the center column in a part that is of the magnetic core and that encloses the first winding hole, and a second air gap is disposed at a position other than the center column in a part that is of the magnetic core and that encloses the second winding hole; and
the first primary-side winding and the first secondary-side winding are wound at the first winding hole, and the second secondary-side winding and at least a part of the second primary-side winding are wound at the second winding hole.

5. The photovoltaic inverter according to claim 4, wherein when the first primary-side winding and the second primary-side winding conduct a differential-mode current, a direction of a magnetic flux generated, on the center column, by the part that is of the second primary-side winding and that is wound at the second winding hole is opposite to that of a magnetic flux generated by the first primary-side winding on the center column.

6. The photovoltaic inverter according to claim 4 or 5, wherein a part of the second primary-side winding is wound at the first winding hole, and the other part of the second primary-side winding is wound at the second winding hole; and
when the first primary-side winding and the second primary-side winding conduct a common-mode current, a direction of a magnetic flux generated, on the magnetic core, by the part that is of the second primary-side winding and that is wound at the first winding hole is opposite to that of a magnetic flux generated by the first primary-side winding on the magnetic core.

7. The photovoltaic inverter according to any one of claims 4 to 6, wherein a third circuit is disposed on the circuit board, and the third circuit is configured to test the first circuit; and
the winding further comprises a third secondary-side winding wound at the first winding hole, the first secondary-side winding is electrically connected to the first circuit, and the third secondary-side winding is electrically connected to the third circuit.

8. The photovoltaic inverter according to any one of claims 4 to 7, wherein the magnetic core further comprises:
a first magnetic column, a second magnetic column, and a third magnetic column, wherein the second magnetic column and the third magnetic column are disposed in an extension direction of the first magnetic column, and the center column is located between the second magnetic column and the third magnetic column; and
a fourth magnetic column, wherein the fourth magnetic column is located on a side that is of the center column and that is away from the first magnetic column, the fourth magnetic column extends from the second magnetic column to the third magnetic column, the first winding hole is located between the second magnetic column and the center column, and the second winding hole is located between the third magnetic column and the center column.

9. The photovoltaic inverter according to claim 8, wherein the second magnetic column, the third magnetic column, and the center column are all connected to a same side of the first magnetic column, the center column is in contact with the fourth magnetic column, the first air gap is formed between the second magnetic column and the fourth magnetic column, and the second air gap is formed between the third magnetic column and the fourth magnetic column.

10. The photovoltaic inverter according to claim 8 or 9, wherein both the first primary-side winding and the second primary-side winding are wound on the fourth magnetic column, and the fourth magnetic column is located on a side that is of the first magnetic column and that faces the circuit board.

11. The photovoltaic inverter according to any one of claims 4 to 10, wherein the current transformer further comprises a first insulation sleeve sleeved on the magnetic core, the first insulation sleeve passes through the first winding hole, the first secondary-side winding is wound outside the first insulation sleeve, the first primary-side winding is wound on a periphery of the first secondary-side winding, and an insulation tape is disposed between the first primary-side winding and the first secondary-side winding; and
the current transformer further comprises a second insulation sleeve sleeved on the magnetic core, the second insulation sleeve passes through the second winding hole, the second secondary-side winding is wound outside the second insulation sleeve, the part that is of the second primary-side winding and that passes through the second winding hole is wound on a periphery of the second secondary-side winding, and an insulation tape is disposed between the second primary-side winding and the second secondary-side winding.

12. The photovoltaic inverter according to any one of claims 2 to 11, wherein a plurality of photovoltaic strings are disposed, the first primary-side winding comprises a plurality of first coils, the plurality of first coils are spaced apart, and each first coil is electrically connected to a positive electrode of one corresponding photovoltaic string; and
the second primary-side winding comprises one second coil, a cross-sectional area of the second coil is greater than a cross-sectional area of a single first coil, and the second coil is configured to electrically connect to negative electrodes of the plurality of photovoltaic strings.

13. The photovoltaic inverter according to claim 12, wherein the plurality of first coils have a same quantity of turns, and a quantity of turns of any first coil is equal to a quantity of turns of the second coil wound at the first winding hole.

14. The photovoltaic inverter according to claim 12 or 13, wherein at least one first coil is disposed on each of two sides of a part that is of the second coil and that is wound at the first winding hole; and
distances between two first coils adjacent to the part that is of the second coil and that is wound at the first winding hole and the part that is of the second coil and that is wound at the first winding hole are equal.

15. A current transformer, comprising a magnetic core and a winding wound on the magnetic core, wherein
the winding comprises a first primary-side winding, a second primary-side winding, a first secondary-side winding, and a second secondary-side winding, the first primary-side winding is configured to electrically connect to a positive electrode of a power supply, the second primary-side winding is configured to electrically connect to a negative electrode of the power supply, the first secondary-side winding is configured to electrically connect to a circuit for direct current arcing detection, and the second secondary-side winding is configured to electrically connect to a circuit for power line carrier communication.

16. The current transformer according to claim 15, wherein the magnetic core is provided with a first winding hole, and the first primary-side winding, the second primary-side winding, the first secondary-side winding, and the second secondary-side winding are all wound at the first winding hole; and
when the first primary-side winding and the second primary-side winding conduct a common-mode current, a direction of a magnetic flux generated by the second primary-side winding on the magnetic core is opposite to that of a magnetic flux generated by the first primary-side winding on the magnetic core.

17. The current transformer according to claim 15, wherein the magnetic core comprises a first winding hole, a second winding hole, and a center column located between the first winding hole and the second winding hole, a first air gap is disposed at a position other than the center column in a part that is of the magnetic core and that encloses the first winding hole, and a second air gap is disposed at a position other than the center column in a part that is of the magnetic core and that encloses the second winding hole; and
the first primary-side winding and the first secondary-side winding are wound at the first winding hole, and the second secondary-side winding and at least a part of the second primary-side winding are wound at the second winding hole.

18. The current transformer according to claim 17, wherein when the first primary-side winding and the second primary-side winding conduct a differential-mode current, a direction of a magnetic flux generated, on the center column, by the part that is of the second primary-side winding and that is wound at the second winding hole is opposite to that of a magnetic flux generated by the first primary-side winding on the center column.

19. The current transformer according to any one of claims 16 to 18, wherein the first primary-side winding comprises a plurality of first coils, and the plurality of first coils are spaced apart;
the second primary-side winding comprises one second coil, and a cross-sectional area of the second coil is greater than a cross-sectional area of a single first coil; and
when a current is loaded, a sum of currents flowing through the plurality of first coils is equal to the current flowing through the second coil.

20. The current transformer according to claim 19, wherein the plurality of first coils have a same quantity of turns, and a quantity of turns of a part that is of the second coil and that is wound at the first winding hole is equal to the quantity of turns of each first coil.

21. A photovoltaic system, comprising at least one optimizer and the photovoltaic inverter according to any one of claims 1 to 14, wherein
each optimizer is configured to connect to the at least one photovoltaic module; and
the at least one optimizer is electrically connected to the second circuit of the photovoltaic inverter.
